(19) Europäisches Patentamt / European Patent Office / Office européen des brevets

(11) EP 3 317 305 B1

# (12) FASCICULE DE BREVET EUROPEEN

(45) Date de publication et mention de la délivrance du brevet:
**08.05.2019 Bulletin 2019/19**

(21) Numéro de dépôt: **16734363.1**

(22) Date de dépôt: **30.06.2016**

(51) Int Cl.:
***C08C 19/25*** *(2006.01)* ***C08C 19/44*** *(2006.01)*
***C08F 236/10*** *(2006.01)* ***C08F 2/06*** *(2006.01)*

(86) Numéro de dépôt international:
**PCT/EP2016/065441**

(87) Numéro de publication internationale:
**WO 2017/001637 (05.01.2017 Gazette 2017/01)**

## (54) PROCÉDÉ DE SYNTHÈSE EN CONTINU D'UN ÉLASTOMÈRE DIÉNIQUE MODIFIÉ

VERFAHREN ZUR KONTINUIERLICHEN SYNTHESE EINES MODIFIZIERTEN DIENELASTOMERS

PROCESS FOR THE CONTINUOUS SYNTHESIS OF A MODIFIED DIENE ELASTOMER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.07.2015 FR 1556254**

(43) Date de publication de la demande:
**09.05.2018 Bulletin 2018/19**

(73) Titulaire: **Compagnie Générale des Etablissements Michelin**
**63000 Clermont-Ferrand (FR)**

(72) Inventeurs:
- **DORATO, Margarita**
**63040Clermont-Ferrand Cedex 9 (FR)**
- **FLESINSKI, Lionel**
**63040 Clermont-Ferrand Cedex 9 (FR)**

(74) Mandataire: **Le Cam, Véronique Marie Christine**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**EP-A1- 1 457 501**
**WO-A1-2014/040640**
**WO-A1-2015/018599**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 317 305 B1

## Description

La présente invention se rapporte à un procédé de synthèse en continu d'un élastomère diénique modifié présentant une distribution étroite de poids moléculaires avant modification.

Depuis que les économies de carburant et la nécessité de protéger l'environnement sont devenues une priorité, il est souhaitable de produire des polymères possédant de bonnes propriétés mécaniques et une hystérèse aussi faible que possible afin de pouvoir les mettre en oeuvre sous forme de compositions caoutchouteuses utilisables pour la fabrication de divers produits semi-finis entrant dans la constitution d'enveloppes de pneumatiques et obtenir des pneumatiques aux propriétés améliorées, notamment possédant une résistance au roulement réduite.

La réduction de l'hystérèse des mélanges est un objectif permanent de l'industrie du pneumatique afin de limiter la consommation de carburant et de préserver ainsi l'environnement. Cela doit toutefois se faire en conservant intacte l'aptitude à la mise en oeuvre des mélanges.

Pour atteindre l'objectif de baisse d'hystérèse, de nombreuses solutions ont déjà été expérimentées. En particulier, on peut citer la modification de la structure des polymères et des copolymères diéniques en fin de polymérisation au moyen d'agents de fonctionnalisation, de couplage ou d'étoilage dans le but d'obtenir une bonne interaction entre le polymère ainsi modifié et la charge, qu'il s'agisse du noir de carbone ou d'une charge inorganique renforçante.

La réduction de la distribution des masses moléculaires avant modification de l'élastomère permet également d'améliorer le compromis hystérèse / mise en oeuvre du matériau.

La synthèse des élastomères avec un procédé de type discontinu est préférable à cet égard, car ce type de procédé permet un contrôle de la distribution moléculaire afin d'obtenir des copolymères diéniques avec une distribution étroite de poids moléculaire avant fonctionnalisation, à la différence d'un procédé continu qui donne accès à une distribution large de poids moléculaires.

On peut citer à titre d'exemple les brevets US 6 313 232, EP 1318172 et EP 1 829 906 affirmant que les produits présentant une faible polymolécularité sont favorables à une hystérèse réduite. Les polymères linéaires à distributions moléculaires étroites présentent en plus une mise en oeuvre améliorée.

Le brevet US 5 587 420 décrit une méthode de polymérisation de monomères diéniques en solution en solvant hydrocarboné utilisant comme initiateur un composé organolithié en discontinu. Un composé organostannique ou un halogénure d'étain est ajouté pendant le batch. Ce type de procédé discontinu est moins productif et moins économique qu'un procédé continu. Cela est décrit dans le brevet US 6 313 232 qui décrit un procédé continu avec une première étape de polymérisation en présence d'un composé dérivé de l'étain suivi d'une étape de fonctionnalisation à l'étain en sortie du réacteur de production d'un polymère diénique avec des propriétés physiques améliorées, dont la diminution de l'hystérèse. Mais les valeurs de polymolécularité de polymères synthétisés avec cette méthode ne sont pas indiquées.

Par ailleurs, pour que le polymère obtenu puisse être valorisé, le procédé de synthèse doit être compétitif et économique. Dans ce sens, un procédé de type continu est préférable. Cependant, ce type de procédé avec un réacteur parfaitement agité ne permet pas un contrôle de l'indice de polymolécularité comme les procédés du type discontinu.

De nombreux brevets décrivent la synthèse d'élastomères fonctionnels en procédé continu. On peut citer le brevet JP 1988-235305 (63-235305JP) qui décrit un procédé continu de polymérisation économique où le polymère obtenu a une distribution moléculaire large.

Le but de l'invention est donc de trouver un procédé continu économique capable de synthétiser des élastomères diéniques modifiés avec une faible distribution de masse moléculaire avant fonctionnalisation qui permet un gain sur le compromis hystérèse/mise en oeuvre du matériau ainsi synthétisé.

Le brevet US6372863B1 décrit un procédé continu de polymérisation du styrène et du butadiène dans deux réacteurs en série, selon lequel la totalité du styrène est introduit dans le premier réacteur avec une partie seulement du butadiène, le restant du butadiène étant introduit dans le deuxième réacteur. Ce procédé permet de synthétiser des copolymères statistiques de faible taux de vinyl avec une absence de blocs styrène. Ce brevet prévoit également une fonctionnalisation subséquente à l'étape de polymérisation, notamment au moyen d'un agent de couplage à base d'étain.

Les inventeurs ont maintenant découvert de façon surprenante que les buts de l'invention pouvaient être obtenus par un procédé de synthèse en continu comprenant une étape de polymérisation réalisée dans plusieurs réacteurs en série, la température du dernier réacteur étant supérieure à la température du premier réacteur , du monomère purifié étant réinjecté dans les réacteurs autres que le premier, et une étape de modification au moyen d'un agent de couplage spécifique, l'élastomère diénique modifié obtenu présentant un indice de polymolécularité variant de 1,1 à 2 avant modification et un faible taux de chaînes mortes.

L'invention a donc pour objet un procédé de synthèse en continu d'un élastomère diénique modifié comprenant

a) une étape de polymérisation mise en oeuvre au moyen de n réacteurs r1 à rn, équipés d'un système d'agitation interne, supposés parfaitement agités, disposés en série, n variant de 2 à 15, de préférence de 2 à 9, le réacteur r1 étant alimenté par une solution d'entrée comprenant un solvant, un ou plusieurs monomères, un initiateur de polymérisation anionique et un agent polaire, un ou plusieurs des réacteurs r2 à rn étant en outre alimenté(s) par

réinjection d'une solution purifiée comprenant du solvant et/ou du ou des monomères,

b) une étape de modification de l'élastomère vivant obtenu à l'étape de polymérisation précédente et présentant un indice de polymolécularité compris entre 1,1 et 2, au moyen d'au moins un agent de fonctionnalisation, de couplage ou d'étoilage, qui permet d'introduire dans l'élastomère un groupement fonctionnel comprenant au moins un atome de silicium directement relié à la chaîne élastomère.

La pureté de la ou de chaque solution réinjectée est telle que la proportion du nombre de chaînes mortes dans le flux en sortie du réacteur rn est par rapport au nombre de chaînes vivantes initiées dans le réacteur r1 significativement minimisée, et est inférieure à 30%, de préférence inférieure à 10%. Sans souhaiter être lié à une quelconque théorie, il est supposé que ce taux minimisé de chaînes mortes favorise le taux de fonctionnalisation et contribue ainsi à l'amélioration du compromis hystérèse/mise en oeuvre du matériau.

Dans le cadre de la présente demande, on appelle réinjection le fait de répéter l'action d'injection dans un réacteur ri', différent du réacteur r1, déjà alimenté par le flux issu de ri'-1. La réinjection peut être faite directement dans un ou plusieurs des réacteurs, ou, avantageusement, par mélangeage au flux issu de ri'-1. La réinjection peut être faite avec des flux de composition identique ou différente du flux d'alimentation de r1. Quand la réinjection a lieu dans au moins deux réacteurs, les natures de ces réinjections peuvent être identiques ou différentes. On appelle monomère réinjecté, le monomère injecté dans ri' non issu du flux provenant de ri'-1.

Dans le cas d'une polymérisation anionique, la chaine vivante est un carbanion. Le carbanion est une espèce très réactive. Il réagit avec des espèces protiques ou des espèces électrophiles.

Aussi si la charge du premier réacteur contient des impuretés protiques (alcools, eau, acides ...) ou électrophiles (carbonyles, ...), l'initiateur réagira d'abord avec ces impuretés pour conduire à des espèces inactives (alcoolates, ...) incapables d'initier la polymérisation des monomères.. C'est la raison pour laquelle le premier réacteur est alimenté par une solution d'entrée qui comprend entre autres les monomères et l'initiateur. Ainsi, l'initiateur est mis en contact avec l'ensemble des constituants de la solution d'entrée préalablement à leur introduction dans le réacteur afin de neutraliser les impuretés. La différence entre la quantité d'initiateur introduit en entrée du réacteur r1 et la quantité d'initiateur ayant réagi avec les impuretés constitue la quantité d'initiateur actif. Le nombre de chaînes vivantes initiées dans le réacteur r1 est équivalent à cette quantité d'initiateur actif dans le réacteur r1.

En revanche pour la ou les réinjections ultérieures entre les réacteurs, la neutralisation des impuretés apportées par la réinjection se fera par le carbanion polymère présent dans ces réacteurs. Cette neutralisation empêche la chaine de polymère de se propager et la chaine devient donc morte. Cette espèce n'est plus réactive avec les agents de stoppage, fonctionnalisation, couplage ou étoilage éventuels.

C'est pourquoi, en dehors de la charge du premier réacteur, il est nécessaire de contrôler la pureté de chaque solution réinjectée afin de garantir un taux de polymère mort en sortie du réacteur rn le plus faible possible, soit inférieur à 30% en nombre, de préférence inférieur à 10% en nombre par rapport au nombre total de chaines initiées dans le réacteur r1.

Selon l'invention, la température de chaque réacteur varie de 20 à 150°C, de préférence de 30 °C à 120 °C, et est supérieure ou égale à la température du réacteur qui le précède immédiatement, la température du réacteur rn étant supérieure à la température du réacteur r1.

Selon l'invention :

- la quantité massique $M_1$ de monomère(s) introduit(s) dans le réacteur r1 est telle que

$$0{,}1 < \frac{M1}{\sum_{i=1}^{n} Mi} \leq 1$$

- la quantité massique $M_{i'}$ de monomère(s) réinjecté(s) dans le réacteur ri', lorsque $M_{i'} \neq 0$,i' variant de 2 à n, est telle que

$$0 \leq \frac{Mi'}{\sum_{1}^{n} Mi} < 0{,}9$$

et telle que Mi' représente de 5 à 100% en masse de la masse de la solution réinjectée dans le réacteur ri', lorsque $M_{i'} \neq 0$,

où Mi est la quantité massique de monomère(s) introduit(s) dans le réacteur ri, i variant de 1 à n,

la quantité massique de l'ensemble des monomères rentrant dans les réacteurs r1 à rn représentant 5 à 25%

en masse de toutes les entrées massiques du procédé des réacteurs r1 à rn,

- la conversion massique globale Ci" dans chaque réacteur ri" est telle que

$$\frac{Cn}{n} - 0,2 < \frac{Ci''}{i''} < \frac{Cn}{n} + 0,2$$

où

$$Ci'' = \frac{Pi''}{\sum_1^n Mi}$$

où Pi" est la masse de polymère formé à la sortie du réacteur ri", i" variant de 1 à n-1,
Cn est la conversion massique globale dans le réacteur rn, avec

$$Cn = \frac{Pn}{\sum_1^n Mi}$$

où Pn est la masse de polymère total à la sortie du réacteur rn.

Selon le procédé de l'invention, l'étape de polymérisation permet de synthétiser en continu un élastomère diénique vivant présentant un indice de polymolécularité variant de 1,1 à 2, de préférence variant de 1,1 à moins de 1,7, plus préférentiellement variant de 1,2 à 1,6.
Par quantité massique de l'ensemble des monomère(s) rentrant dans les réacteurs r1 à rn, on entend la somme de la quantité massique de monomère(s) introduit dans le réacteur r1 par la solution d'entrée et des quantités massiques du ou des monomères réinjectés dans l'un ou plusieurs des réacteurs r2 à rn.
Par indice de polymolécularité, également désigné par indice de polydispersité, on entend le rapport entre la masse moléculaire moyenne en poids et la masse moléculaire moyenne en nombre. Les masses moléculaires moyennes en poids et en nombre sont mesurées par chromatographie d'exclusion stérique.
L'étape de polymérisation du procédé selon l'invention permet de contrôler l'indice de polymolécularité du polymère synthétisé par le contrôle de la conversion dans chaque réacteur et par le nombre de réacteurs.
Le contrôle de la conversion dans chaque réacteur est assuré par la température, le temps de séjour, la quantité d'agent polaire et la quantité de monomère entrant dans chaque réacteur.
L'équilibrage des conversions dans chaque réacteur, tel qu'indiqué précédemment, permet de minimiser l'indice de polymolécularité.
En travaillant à température croissante selon l'invention, on accélère la propagation dans les réacteurs suivants et on équilibre ainsi les conversions.
La réinjection éventuelle d'une partie des monomères dans un ou plusieurs des réacteurs à partir du deuxième impacte la quantité de monomères présents dans le réacteur et le temps de séjour au sein de celui-ci. Ainsi, ces réinjections, qui constituent une mise en oeuvre avantageuse du procédé de l'invention, contribuent également à l'équilibrage des conversions, et comme expliqué précédemment, au contrôle de l'indice de polymolécularité.
De façon avantageuse, la très grande pureté des monomères réinjectés permet de diminuer l'impact des réactions secondaires qui ont tendance à élargir la distribution moléculaire du polymère formé.
Les temps de séjour et les températures sont également choisis pour ne pas favoriser ces réactions secondaires.
De préférence, les réacteurs sont équipés d'un mécanisme d'agitation interne.
De préférence, le nombre de réacteurs est égal à 2 ou 3, de préférence 2.
Lorsque le nombre de réacteur est égal à 2, l'étape de polymérisation du procédé selon l'invention présente au moins l'une des caractéristiques suivantes et de préférence toutes les caractéristiques suivantes :

- une réinjection d'une solution comprenant du ou des monomères est effectuée dans le réacteur r2,
- la pureté de la solution réinjectée dans le réacteur r2 est telle que la proportion du nombre de chaînes mortes dans le flux en sortie du réacteur r2 est inférieur à 10%, préférentiellement inférieure à 5% du nombre de chaînes vivantes initiées dans le réacteur r1,

- la température des réacteurs r1 et r2 varie de 20 à 150°C, de préférence de 30°C à 120°C la température du réacteur r2 étant supérieure à la température du réacteur r1,
- la quantité massique de monomère(s) introduit(s) dans le réacteur r1 est supérieure à 10% et inférieure à 100% de la quantité massique totale des monomères introduits dans les réacteurs r1 et r2,
- la quantité massique de monomère(s) réinjecté(s) dans le réacteur r2 est inférieure à 90% en poids du poids total de monomère(s) injecté(s) dans le réacteur r1 et réinjecté(s) dans le réacteur r2,
- la quantité massique de l'ensemble des monomères rentrant dans les réacteurs r1 à rn représentant 5 à 25% en masse de la somme des entrées massiques des réacteurs r1 et r2,
- la conversion massique globale dans le réacteur 1 est égale à la moitié de la conversion massique globale dans le réacteur 2, +/- 20%.

De préférence, le temps de séjour dans le réacteur ri est compris entre 1 et 60 minutes, de préférence entre 5 et 60, de préférence encore entre 10 et 50 minutes. Il est calculé de la manière suivante :

$$\tau_i = \frac{V_i}{Q_{Vn}}$$

Avec :

- Vi, volume réactionnel Ri, i variant de 1 à n
- QVn = débit volumique sortant du réacteur n.

Comme expliqué précédemment, une solution comprenant du ou des monomères peut être réinjectée dans un ou plusieurs des réacteurs r2 à rn.

L'une ou plusieurs des solutions réinjectées peut contenir un agent polaire.

La pureté de chaque solution réinjectée est telle que la proportion du nombre de chaînes mortes dans le flux en sortie du réacteur rn par rapport au nombre de chaînes vivantes initiées dans le réacteur r1 est minimisée, de préférence inférieure à 30% en nombre, plus préférentiellement inférieure à 10% en nombre et plus préférentiellement inférieur à 5% en nombre.

Par pureté d'une solution réinjectée, on entend la proportion massique de monomère(s) éventuel, et de solvant éventuel et d'agent polaire éventuel, par rapport à la masse totale de la solution réinjectée.

Chaque solution réinjectée contient du solvant purifié et/ou des monomères purifiés.

Le constituant ou chaque constituant de la ou des solutions réinjectées peut être, avant réinjection, purifié indépendamment par tout moyen de purification habituellement utilisé pour purifier les constituants, par exemple par adsorption, extraction liquide/liquide, extraction gaz/liquide ou distillation.

En particulier, le solvant et/ou le ou les monomères peuvent être purifiés indépendamment par adsorption, extraction liquide/liquide, extraction gaz/liquide ou distillation.

L'adsorption peut se faire sur zhéolithe ou sur alumine.

L'extraction liquide/liquide peut se faire au moyen de la soude.

L'extraction gaz/liquide peut se faire au moyen d'un flux d'air ou d'azote.

La distillation peut être une distillation mono-étagée sans reflux (ou flash) ou une distillation sur colonne éventuellement sous vide.

Le flash est effectué au moyen d'un compartiment d'évaporation. La distillation sur colonne est effectuée au moyen d'une colonne de distillation.

Quel que soit le procédé de purification choisi pour chaque constituant, la phase purifiée est utilisée pour constituer le flux à réinjecter.

Selon un mode de réalisation, les résidus du ou des procédés de purification du ou de chaque constituant peuvent être réinjectés dans la solution d'entrée alimentant le premier réacteur. Ces résidus sont constitués des monomères et/ou du solvant avec une forte concentration en impuretés. Les résidus peuvent alors soit constituer un appoint en monomère et/ou en solvant à la solution d'entrée, soit constituer la source unique en monomère et/ou en solvant de la solution d'entrée. Ce mode de réalisation permet de limiter la perte de matière dans le cas de réinjection.

Par élastomère diénique, doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non). Plus particulièrement, par élastomère diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs monomères vinylaromatiques ayant de 8 à 20 atomes de carbone. Dans le cas de copolymères, ceux-ci contiennent de 20 % à 99 % en poids d'unités diéniques, et de 1 à 80 % en poids d'unités vinylaromatiques.

A titre de diènes conjugués utilisables dans le procédé conforme à l'invention conviennent notamment le butadiène-1,3, le 2-méthyl-1,3-butadiène, les 2,3 di(alcoyle en $C_1$ à $C_5$)-1,3-butadiène tels que par exemple le 2,3-diméthyl-1,3-butadiène, 2,3-diéthyl-1,3-butadiène, 2-méthyl-3-éthyl-1,3-butadiène, le 2-méthyl-3-isopropyl-1,3-butadiène, le phényl-1,3-butadiène, le 1,3-pentadiène et le 2,4 hexadiène, etc.

A titre de monomères vinylaromatiques conviennent notamment le styrène, l'ortho-, méta, para-méthylstyrène, le mélange commercial "vinyltoluène", le para-tertiobutylstyrène, les méthoxystyrènes, le vinylmésitylène, le divinylbenzène et le vinylnaphtalène, etc.

L'élastomère diénique est choisi préférentiellement dans le groupe des élastomères diéniques fortement insaturés constitué par les polybutadiènes (BR), les polyisoprènes (IR) de synthèse, les copolymères de butadiène, en particulier les copolymères de butadiène et d'un monomère vinyl aromatique, les copolymères d'isoprène et les mélanges de ces élastomères. De tels copolymères sont plus particulièrement des copolymères de butadiène-styrène (SBR), des copolymères d'isoprène-butadiène (BIR), des copolymères d'isoprène-styrène (SIR) et des copolymères d'isoprène-butadiène-styrène (SBIR). Parmi ces copolymères, les copolymères de butadiène-styrène (SBR) sont particulièrement préférés.

L'élastomère diénique est généralement préparé par polymérisation anionique en présence d'un initiateur de polymérisation. L'initiateur de polymérisation est compris dans la solution d'entrée.

En tant qu'initiateur de polymérisation, on peut utiliser tout initiateur anionique monofonctionnel connu. Toutefois un initiateur contenant un métal alcalin tel que le lithium est utilisé à titre préférentiel.

En tant qu'initiateur de polymérisation, on peut utiliser tout initiateur anionique monofonctionnel connu. Toutefois un initiateur contenant un métal alcalin tel que le lithium est utilisé à titre préférentiel. Comme initiateurs organolithiens conviennent notamment ceux comportant une liaison carbone-lithium. Des composés représentatifs sont les organolithiens aliphatiques tels que l'éthyllithium, le n-butyllithium (n-BuLi), l'isobutyllithium, etc. La polymérisation est effectuée en présence d'un solvant compris dans la solution d'entrée.

Le solvant utilisé dans le procédé selon l'invention est de préférence un solvant hydrocarboné inerte qui peut être par exemple un hydrocarbure aliphatique ou alicyclique comme le pentane, l'hexane, l'heptane, l'iso-octane, le cyclohexane, le méthylcyclohexane ou un hydrocarbure aromatique comme le benzène, le toluène, le xylène.

Comme expliqué précédemment, la solution d'entrée, ainsi qu'éventuellement l'une ou plusieurs des solutions réinjectées, utilisée(s) dans le procédé selon l'invention comprend/comprennent un agent polaire.

À titre d'agents polaires chélatants utilisables dans le procédé conforme à l'invention conviennent notamment les agents comprenant au moins une fonction amine tertiaire ou au moins une fonction éther et préférentiellement des agents de type tétrahydrofurfuryle éthyle éther ou tétraméthyle éthylènediamine.

Selon l'invention, l'élastomère diénique vivant compris dans le flux en sortie du réacteur de polymérisation rn est ensuite mis à réagir avec au moins un agent de fonctionnalisation, de couplage ou d'étoilage, qui permet d'introduire dans l'élastomère un groupement fonctionnel comprenant au moins un atome de silicium directement relié à la chaîne élastomère.

A titre d'agent de fonctionnalisation, de couplage ou d'étoilage à base de silicium conviennent également les agents de fonctionnalisation de type polysiloxanes cycliques, pour autant que le milieu réactionnel ne permette pas la polymérisation du cyclopolysiloxane. A titre de polysiloxanes cycliques, on peut citer ceux répondant à la formule 1 :

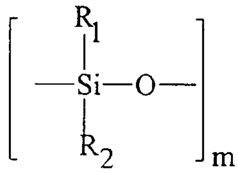

**Formule 1**

avec m représente un nombre entier de valeur allant de 3 à 8, de préférence 3, R1 et R2, identiques ou différents, représentent un radical alkyle de 1 à 10 atomes de carbone, de préférence un radicale alkyle ayant 1 à 4 atomes de carbone. Parmi ces composés, on peut citer l'hexaméthylcyclotrisiloxane.

A titre d'agent de fonctionnalisation, de couplage ou d'étoilage à base de silicium conviennent également les composés répondant à la formule 2 :

$$SiR1_p(OR')_{4-p-q}(R3\text{-}X)_q,$$

dans laquelle,

- R3 est un radical hydrocarboné divalent aliphatique, saturé ou non, cyclique ou non, en $C_1$-$C_{18}$, aromatique en $C_6$-$C_{18}$, de préférence un radical hydrocarboné divalent, linéaire ou ramifié, aliphatique en $C_1$-$C_{10}$, plus préférentiellement un radical hydrocarboné divalent linéaire aliphatique en $C_1$-$C_6$, plus préférentiellement encore le radical hydrocarboné linéaire en $C_3$ ;
- X est un atome d'hydrogène ou une fonction susceptible d'interagir avec une charge renforçante ;
- les radicaux R', substitués ou non substitués, identiques ou différents, représentent un groupe alkyle en $C_1$-$C_{10}$, voire en $C_1$-$C_8$, de préférence un groupe alkyle en $C_1$-$C_4$, plus préférentiellement méthyle et éthyle ;
- les radicaux R1, substitués ou non substitués, identiques ou différents, représentent un groupe alkyle en $C_1$-$C_{10}$, voire en $C_1$-$C_8$ ;
- p représente un nombre entier de valeur allant de 0 à 2, q représente un nombre entier de valeur 0 ou 1, sous réserve que $p+q \leq 2$.

Les différents aspects concernant la formule 2, préférentiels ou non, qui précèdent sont combinables entre eux.

Selon des variantes de l'invention, l'agent de fonctionnalisation de formule 2 ne comporte pas d'autre fonction que celle comprenant l'atome de silicium de type alcoxysilane. Il s'agit alors d'un tétraalcoxysilane, d'un monoalkyl trialcoxysilane, ou d'un dialkyl dialcoxysilane.

Selon d'autres variantes de l'invention, l'agent de fonctionnalisation de formule 2 comporte une fonction autre que la fonction comprenant l'atome de silicium, notamment susceptible d'interagir avec une charge renforçante. Cette dénomination n'exclut toutefois pas la possibilité pour la fonction comprenant l'atome de silicium d'interagir également avec une charge renforçante.

Par fonction susceptible d'interagir avec une charge renforçante, on entend de préférence des fonctions comprenant au moins un hétéroatome choisi parmi N, S, O, P. On peut, à titre d'exemple, citer parmi ces fonctions les amines primaires protégées ou non, secondaires protégées ou non ou tertiaires, cycliques ou non, les isocyanates, les imines, les cyano, la fonction thiol protégée ou non, les carboxylates, les époxydes, les phosphines primaires protégées ou non, secondaires protégées ou non ou tertiaires.

Ainsi, selon des variantes de l'invention, la fonction susceptible d'interagir avec une charge renforçante est une amine primaire, protégée ou non, secondaire, protégée ou non, ou tertiaire. L'atome d'azote peut alors être substitué par deux groupements, identiques ou différents, pouvant être un radical trialkyl silyl, le groupement alkyle ayant 1 à 4 atomes de carbone, ou un radical alkyle en C1-C10, de préférence alkyle en $C_1$-$C_4$, plus préférentiellement un radical méthyle ou éthyle, ou alors les deux substituants de l'azote forment avec celui-ci un hétérocycle contenant un atome d'azote et au moins un atome de carbone, de préférence de 2 à 6 atomes de carbone,

On peut citer par exemple à titre d'agent de fonctionnalisation dont la fonction susceptible d'interagir avec une charge renforçante est une amine, les (N,N-dialkylaminopropyl)trialcoxysilanes, les (N,N-dialkylaminopropyl)alkyldialcoxysilanes, les (N-alkylaminopropyl)trialcoxysilanes et les (N-alkylaminopropyl)alkyldialcoxysilanes dont la fonction amine secondaire est protégée par un groupement trialkyl silyl et les aminopropyltrialcoxysilanes et les aminopropylalkydialcoxysilanes dont la fonction amine primaire est protégée par deux groupements trialkyl silyl. Les substituants alkyle présents sur l'atome d'azote sont linéaires ou ramifiés et possèdent avantageusement de 1 à 10 atomes de carbone, de préférence 1 à 4, plus préférentiellement 1 ou 2. Par exemple, conviennent à titre de substituants alkyles les groupements métylamino-, diméthylamino-, éthylamino-, diéthylamino, propylamino-, dipropylamino-, butylamino-, dibutylamino-, pentylamino-, dipentylamino, hexylamino, dihexylamino, hexaméthylèneamino, de préférence les groupements diéthylamino et diméthylamino. Les substituants alcoxy sont linéaires ou ramifiés et possèdent généralement de 1 à 10 atomes de carbone, voire 1 à 8, de préférence de 1 à 4, plus préférentiellement 1 ou 2.

Préférentiellement, l'agent de fonctionnalisation peut être choisi parmi les 3-(N,N-dialkylaminopropyl)trialcoxysilanes et les 3-(N,N-dialkylaminopropyl)alkyldialcoxysilanes, le groupement alkyl sur l'atome de silicium étant le groupement méthyl ou éthyl et le groupement alcoxy étant le groupement méthoxy ou éthoxy.

Préférentiellement, l'agent de fonctionnalisation peut être choisi parmi les 3-(N,N-alkyltriméthylsilylaminopropyl)trialcoxysilanes et les 3-(N,N-alkyltriméthylsilylaminopropyl)alkyldialcoxysilanes, le groupement alkyl sur l'atome de silicium étant le groupement méthyl ou éthyl et le groupement alcoxy étant le groupement méthoxy ou éthoxy.

Préférentiellement, l'agent de fonctionnalisation peut être choisi parmi les 3-(N,N-bistriméthylsilylaminopropyl)trialcoxysilanes et les 3-(N,N-bistriméthylsilylaminopropyl)alkyldialcoxysilanes, le groupement alkyl sur l'atome de silicium étant le groupement méthyl ou éthyl et le groupement alcoxy étant le groupement méthoxy ou éthoxy.

Selon des variantes de l'invention, la fonction susceptible d'interagir avec une charge renforçante est une fonction isocyanate. Préférentiellement, l'agent de fonctionnalisation peut être choisi parmi les 3-(isocyanatopropyl)trialcoxysilanes et les 3-(isocyanatopropyl)alkyldialcoxysilanes, le groupement alkyl étant le groupement méthyl ou éthyl et le groupement alcoxy étant le groupement méthoxy ou éthoxy.

Selon des variantes de l'invention, la fonction susceptible d'interagir avec une charge renforçante est une fonction imine. Préférentiellement, l'agent de fonctionnalisation peut être choisi parmi le N-(1,3-diméthylbutylidène)-3-(triméthoxysilyl)-1-propanamine, le N-(1,3-diméthylbutylidène)-3-(triéthoxysilyl)-1-propanamine, le N-(1,3-méthyléthylidène)-3-(triméthoxysilyl)-1-propanamine, le N-(1,3-méthyléthylidène)-3-(triéthoxysilyl)-1-propanamine, le N-ethylidène-3-(triméthoxysilyl)-1-propanamine, le N-ethylidène-3-(triéthoxysilyl)-1-propanamine, le N-(1-méthylpropylidène)-3-(triméthoxysilyl)-1-propanamine, le N-(1-méthylpropylidène)-3-(triéthoxysilyl)-1-propanamine, le N-(4-N,N-diméthylaminobenzylidène)-3-(triméthoxysilyl)-1-propanamine, le N-(4-N,N-diméthylaminobenzylidène)-3-(triéthoxysilyl)-1-propanamine, le N-(cyclohexylidène)-3-(triméthoxysilyl)-1-propanamine, le N-(cyclohexylidène)-3-(triéthoxysilyl)-1-propanamine, le N-(3-triméthoxysilylpropyl)-4,5-dihydroimidazole, le N-(3-triéthoxysilylpropyl)-4,5-dihydroimidazole, le N-(3-triméthoxysilylpropyl)-4,5-imidazole et le N-(3-triéthoxysilylpropyl)-4,5-imidazole.

Selon des variantes de l'invention, la fonction susceptible d'interagir avec une charge renforçante est une fonction cyano. Préférentiellement, l'agent de fonctionnalisation peut être choisi parmi les 3-(cyanopropyl)trialcoxysilanes et les 3-(cyanopropyl)alkyldialcoxysilanes, le groupement alkyl étant le groupement méthyl ou éthyl et le groupement alcoxy étant le groupement méthoxy ou éthoxy.

Selon des variantes de l'invention, la fonction susceptible d'interagir avec une charge renforçante est une fonction thiol, protégée ou non. On peut citer à titre d'exemple les (S-trialkylsilylmercaptopropyl)trialcoxysilanes les (S-trialkylsilylmercaptopropyl)alkyldialcoxysilanes, les (S-trialkylsilylmercaptoéthyl)trialcoxysilanes, et les (S-trialkylsilylmercaptoéthyl)alkyldialcoxysilanes, le groupement alkyl sur l'atome de silicium porteur des groupements alcoxysilanes étant le groupement méthyl ou éthyl et le groupement alcoxy étant le groupement méthoxy ou éthoxy. Le groupement alkyl sur le silicium lié à l'atome de soufre est le groupement méthyl ou tert-butyl.

Selon des variantes de l'invention, la fonction susceptible d'interagir avec une charge renforçante est une fonction carboxylate. A titre de fonction carboxylate, on peut citer les acrylates ou les méthacrylates. Une telle fonction est de préférence un méthacrylate. Préférentiellement, l'agent de fonctionnalisation peut être choisi parmi les 3-(méthacryloyloxypropyl)trialcoxysilanes et les 3-(méthacryloyloxypropyl)alkyldialcoxysilanes le groupement alkyl étant le groupement méthyl ou éthyl et le groupement alcoxy étant le groupement méthoxy ou éthoxy.

Selon des variantes de l'invention, la fonction susceptible d'interagir avec une charge renforçante est une fonction époxyde. Préférentiellement, l'agent de fonctionnalisation peut être choisi parmi les 3-(glycidyloxypropyl)trialcoxysilanes et les 3-(glycidyloxypropyl)alkyldialcoxysilanes le groupement alkyl étant le groupement méthyl ou éthyl et le groupement alcoxy étant le groupement méthoxy ou éthoxy.

Selon des variantes de l'invention, la fonction susceptible d'interagir avec une charge renforçante est une fonction phosphine primaire, protégée ou non, secondaire, protégée ou non, ou tertiaire. Préférentiellement, l'agent de fonctionnalisation peut être choisi parmi les 3-(P,P-bistriméthylsilylphosphinopropyl)trialcoxysilanes, les 3-(P,P-bistriméthylsilylphosphinopropyl)alkyldialcoxysilanes, les 3-(P,P-alkyltriméthylsilylphosphinopropyl)trialcoxysilanes, les 3-(P,P-alkyltriméthylsilylphosphinopropyl)alkyldialcoxysilanes, les 3-(P,P-dialkylphosphinopropyl)trialcoxysilanes et les 3-(P,P-dialkylphosphinopropyl)alkyldialcoxysilanes, le groupement alkyl sur l'atome de phosphore étant le groupement méthyl, éthyl ou phényl, le groupement alkyl sur l'atome de silicium étant le groupement méthyl ou éthyl et le groupement alcoxy étant le groupement méthoxy ou éthoxy.

Les différents aspects, préférentiels ou non, qui précèdent et qui concernent l'agent de fonctionnalisation de formule 2, notamment quant à la nature de l'autre fonction susceptible d'interagir avec la charge renforçante, la nature du groupement espaceur R3 et la nature du groupe alcoxysilane sont combinables entre eux.Selon le procédé de l'invention, on peut utiliser un seul agent de fonctionnalisation, de couplage ou d'étoilage à base de silicium ou un mélange d'au moins deux de ces agents.

Selon le procédé de l'invention, l'agent de fonctionnalisation, de couplage ou d'étoilage à base de silicium est en solution dans un solvant compatible avec celui compris dans le flux issu du réacteur de polymérisation rn et alimentant le dispositif de fonctionnalisation. Par solvant compatible, on entend généralement solvant miscible avec le solvant de polymérisation. Préférentiellement, ce solvant est identique au solvant de polymérisation.

Selon le procédé de l'invention, l'agent de fonctionnalisation, de couplage ou d'étoilage à base de silicium est ajouté dans des proportions telles que le rapport molaire de cet agent de fonctionnalisation, de couplage ou d'étoilage à base de silicium à l'initiateur de polymérisation dépend essentiellement du type d'élastomère diénique modifié voulu et du nombre de sites de l'agent de fonctionnalisation, de couplage ou d'étoilage réactifs vis-à-vis de l'élastomère vivant. Par sites réactifs, on entend essentiellement dans le cadre de l'invention des liaisons Si-O dans la formule 1, des liaisons Si-OR dans la formule 2.

Il est clair pour l'homme du métier que les agents de fonctionnalisation de formule 1 ne permettent de modifier l'élastomère qu'en bout de chaîne, et ne permettent pas le couplage et l'étoilage. Le rapport molaire de cet agent de fonctionnalisation à base de silicium à l'initiateur de polymérisation définit uniquement les proportions de chaînes fonctionnalisées en bout de chaîne et de chaînes non fonctionnelles dans l'élastomère modifié.

Ainsi, avec un rapport allant de 0,40 à 0,75, préférentiellement de 0,45 à 0,65 et encore plus préférentiellement de 0,45 à 0,55, on privilégie la formation d'espèces couplées au sein de l'élastomère modifié si l'agent de formule 2 possède au moins deux sites réactifs vis-à-vis de l'élastomère vivant. De la même manière, avec un rapport allant de 0,15 à 0,40, préférentiellement de 0,20 à 0,35, on forme majoritairement des espèces étoilées (3 et/ou 4 branches) au sein de l'élastomère modifié si l'agent de formule 2 possède au moins trois sites réactifs vis-à-vis de l'élastomère vivant.

Avec un rapport supérieur ou égal à 0,75, préférentiellement supérieur à 1, on forme majoritairement des espèces fonctionnalisées en bout de chaîne si l'agent possède au moins un site réactif vis-à-vis de l'élastomère vivant.

Selon le procédé de l'invention, l'agent de fonctionnalisation, de couplage ou d'étoilage à base de silicium est injecté en continu de manière homogène dans un dispositif de fonctionnalisation alimenté en entrée du dispositif par le flux en sortie du réacteur de polymérisation rn comprenant l'élastomère diénique vivant porteur d'un site actif. On entend par dispositif de fonctionnalisation, un ou plusieurs réacteurs en série. Ces réacteurs peuvent être de nature identique ou différente, notamment tubulaire, tubulaire avec dispersion axiale, agité ou supposé parfaitement agité. L'injection en continu d'au moins un agent de fonctionnalisation, de couplage ou d'étoilage s'effectue dans au moins un de ces réacteurs.

Le temps de séjour dans chaque réacteur tubulaire, ou tubulaire à dispersion axiale est de préférence compris entre 0 et 120 minutes, notamment entre 0,1 et 60 minutes, plus préférentiellement entre 0,1 et 5 minutes.

Le temps de séjour dans chaque réacteur continu parfaitement agité ou réacteur agité, est de préférence compris entre 0 et 60 minutes, plus préférentiellement entre 5 et 50 minutes,

Selon l'invention, la température de fonctionnalisation varie de 30 à 150°C. De préférence, la température de fonctionnalisation est égale à la température au sein du réacteur de polymérisation qui précède immédiatement le dispositif de fonctionnalisation.

Lorsque l'agent de fonctionnalisation, de couplage ou d'étoilage à base de silicium est conforme à la formule 2, une mise en oeuvre particulièrement avantageuse de l'invention consiste à utiliser un dispositif pour la fonctionnalisation de l'élastomère diénique vivant conforme à celui décrit dans la demande FR 3 009 556 A1, dont le contenu doit être considéré comme faisant partie de la présente demande. Il est ainsi possible de procéder de manière compétitive, économique et flexible, adaptable à une production industrielle à la synthèse d'élastomères diéniques modifiés avec une maîtrise de la répartition des espèces fonctionnelles (fonctionnalisée en bout de chaîne et/ou couplée et/ou étoilée) au sein de l'élastomère.

Le dispositif de fonctionnalisation de cette mise en oeuvre avantageuse de l'invention lorsque l'agent de fonctionnalisation, de couplage ou d'étoilage à base de silicium est conforme à la formule 2 peut avoir pour modèle l'un des modèles suivants:

- un réacteur tubulaire avec dispersion axiale, ou alternativement,
- un réacteur tubulaire avec dispersion axiale en série avec au moins un réacteur continu agité, supposé parfaitement agité, ou alternativement,
- au moins un réacteur tubulaire avec dispersion axiale, en série avec un réacteur continu agité, supposé parfaitement agité, ou alternativement,
- plusieurs réacteurs tubulaires avec dispersion axiale en série avec plusieurs réacteurs continus agités, supposés parfaitement agités, ou alternativement,
- au moins deux réacteurs continus agités, supposés parfaitement agités, en série.

Selon un mode de réalisation particulier, l'élastomère diénique vivant compris dans le flux en sortie du réacteur de polymérisation rn peut être mis à réagir avec au moins deux agents de fonctionnalisation, de couplage ou d'étoilage à base de silicium, plus particulièrement au moins deux agents différents conformes à la formule 2. On peut citer par exemple la combinaison d'un trialcoxysilane et d'un alkyldialcoxysilane, porteurs chacun d'une fonction susceptible d'interagir avec une charge renforçante de préférence identique, celle-ci étant avantageusement choisie parmi les amines primaires protégées ou non, secondaires protégées ou non ou tertiaires, cycliques ou non, la fonction thiol protégée ou non.

Selon un autre mode de réalisation particulier, éventuellement combinable avec le mode de réalisation précédent, l'élastomère diénique vivant compris dans le flux en sortie du réacteur de polymérisation rn peut être mis à réagir avec en outre un agent de couplage ou d'étoilage à base de silicium ou d'étain. Parmi ceux-ci, on peut citer les dérivés de l'étain ou de silicium de formule $MR_xX_{4-x}$, M représente un atome Sn ou Si, x représente un nombre entier de valeur 0 à 2, de préférence de valeur 0 à 1, R représente un radical alkyle de 1 à 10 atomes de carbone, de préférence un radicale alkyle ayant 1 à 4 atomes de carbone, et X est un atome d'halogène, de préférence le chlore. On peut citer à titre d'exemple des composés tels que le tétrachlorure d'étain, le trichlorure de méthyl étain, le dichlorure de diméthyl étain, le tétrachlorosilane, le méthyltrichlorosilane et le diméthyldichlorosilane.

La réaction avec cet agent de couplage ou d'étoilage complémentaire peut se faire de manière connue en soi.

Selon l'invention, les aspects préférentiels de ce mode de réalisation particulier du procédé de synthèse de l'élastomère diénique modifié sont combinables avec les différents aspects, préférentiels ou non, des autres modes ou variantes de réalisation du procédé qu'il complète.

Le procédé de synthèse de l'élastomère diénique modifié selon l'invention peut se poursuivre de manière connue en soi.

Selon des variantes de l'invention, le procédé peut comprendre une étape de stoppage classique au moyen par exemple de méthanol ou d'eau.

Selon les variantes de l'invention selon lesquelles l'agent de fonctionnalisation est porteur d'une fonction amine primaire ou secondaire protégée, le procédé de synthèse peut se poursuivre par une étape de déprotection de l'amine primaire ou secondaire. Cette étape est mise en oeuvre après la réaction de modification. On peut à titre d'exemple faire réagir les chaînes fonctionnalisées par le groupement amine protégé avec un acide, une base, un dérivé fluoré tel le fluorure de tétrabutylammonium, un sel d'argent tel que le nitrate d'argent, etc...pour déprotéger cette fonction amine. Ces différentes méthodes sont décrites dans l'ouvrage « Protective Groups in Organic Synthesis, T. W. Green, P. G. M. Wuts, Third Edition,1999 ». Cette étape de déprotection peut avoir pour effet d'hydrolyser tout ou partie des fonctions alcoxysilanes hydrolysables de l'élastomère diénique modifié pour les transformer en fonctions silanol.

Selon les variantes de l'invention selon lesquelles l'agent de fonctionnalisation est porteur d'une fonction thiol protégée, le procédé de synthèse peut se poursuivre par une étape de déprotection du thiol. Cette étape est mise en oeuvre après la réaction de modification. On peut à titre d'exemple faire réagir les chaînes fonctionnalisées par le groupement thiol protégé avec de l'eau, un alcool, ou un acide (acide chlorhydrique, acide sulfurique, acide carboxylique). Cette étape de déprotection peut avoir pour effet d'hydrolyser tout ou partie des fonctions alcoxysilanes hydrolysables de l'élastomère diénique modifié pour les transformer en fonctions silanol.

Selon les variantes de l'invention selon lesquelles l'agent de fonctionnalisation est porteur d'une fonction phosphine primaire ou secondaire protégée, le procédé de synthèse peut se poursuivre par une étape de déprotection de la phosphine. Cette étape est mise en oeuvre après la réaction de modification. On peut à titre d'exemple faire réagir les chaînes fonctionnalisées par le groupement phosphine protégé avec de l'eau, un alcool, ou un acide (acide chlorhydrique, acide sulfurique, acide carboxylique). Cette étape de déprotection peut avoir pour effet d'hydrolyser tout ou partie des fonctions alcoxysilanes hydrolysables de l'élastomère diénique modifié pour les transformer en fonctions silanol.

Selon des variantes de l'invention, le procédé de synthèse peut comprendre une étape d'hydrolyse des fonctions alcoxysilanes hydrolysables, par adjonction d'un composé acide, basique ou neutre tel que décrit dans le document EP 2 266 819 A1. Les fonctions hydrolysables sont alors transformées en fonction silanol.

Selon des variantes de l'invention, le procédé de synthèse avec un agent de fonctionnalisation de formule 1 peut comprendre une étape de réaction avec un composé donneur de protons pour conduire au polymère diénique fonctionnalisé silanol en extrémité de chaîne.

Le procédé de synthèse de l'élastomère diénique modifié selon l'invention peut se poursuivre de manière connue en soi par les étapes de récupération de l'élastomère modifié.

Selon des variantes de ce procédé, ces étapes comprennent une étape de stripping en vue de récupérer l'élastomère issu des étapes antérieures sous forme sèche. Cette étape de stripping peut avoir pour effet d'hydrolyser tout ou partie des fonctions hydrolysables de l'élastomère diénique modifié, notamment les fonctions alcoxysilanes hydrolysables les transformant en fonctions silanol. Au moins 50 à 70% molaire des fonctions hydrolysables peuvent ainsi être hydrolysées.

Le procédé selon l'invention est un procédé continu adaptable à une production industrielle, capable de synthétiser des élastomères diéniques modifiés avec une faible distribution de masse moléculaire avant modification qui, utilisés en compositions de caoutchouc renforcée, notamment destinées à la fabrication de pneumatiques, permettent un gain sur le compromis hystérèse de la composition /mise en oeuvre du matériau ainsi synthétisé.

Les caractéristiques précitées de la présente invention, ainsi que d'autres, seront mieux comprises à la lecture de la description suivante de plusieurs exemples de réalisation de l'invention, donnés à titre illustratif et non limitatif.

<u>Mesures et tests utilisés</u>

<u>Température de transition vitreuse</u>

Dans ces exemples, les températures de transition vitreuse (Tg) des élastomères sont déterminées à l'aide d'un calorimètre différentiel ("differential scanning calorimeter").

<u>Indice de polymolécularité</u>

L'indice de polymolécularité du polymère est déterminé à l'aide d'une SEC (chromatographie d'exclusion stérique).

La technique SEC (« Size Exclusion Chromatography ») permet de séparer les macromolécules en solution suivant leur taille à travers des colonnes remplies d'un gel poreux. Les macromolécules sont séparées suivant leur volume hydrodynamique, les plus volumineuses étant éluées en premier.

Sans être une méthode absolue, la SEC permet d'appréhender la distribution des masses molaires d'un polymère. A partir de produits étalons commerciaux, les différentes masses molaires moyennes en nombre (Mn) et en poids (Mw) peuvent être déterminées et l'indice de polymolécularité (Ip = Mw/Mn) calculé via un étalonnage dit de

MOORE.

Il n'y a pas de traitement particulier de l'échantillon de polymère avant analyse. Celui-ci est simplement solubilisé dans le solvant d'élution à une concentration d'environ 1 g.L-1. Puis la solution est filtrée sur filtre de porosité 0,45µm avant injection.

L'appareillage utilisé est une chaîne chromatographique "WATERS alliance". Le solvant d'élution est soit le tétrahydrofurane, soit le tétrahydrofurane + 1%vol. de diisopropylamine + 1%vol. de triéthylamine, le débit de 1 mL.min-1, la température du système de 35° C et la durée d'analyse de 30 min. Un jeu de deux colonnes WATERS de dénomination commerciale "STYRAGEL HT6E" est utilisé. Le volume injecté de la solution de l'échantillon de polymère est 100 µL. Le détecteur est un réfractomètre différentiel "WATERS 2410" et le logiciel d'exploitation des données chromatographiques est le système "WATERS EMPOWER".

Les masses molaires moyennes calculées sont relatives à une courbe d'étalonnage réalisée pour des SBR de microstructure suivante : 25% massique de motifs type styrène, 23% massique de motifs type 1-2 et 50% massique de motifs type 1-4 trans.

Conversion

Les conversions sont mesurées par pesées d'extrait sec de la solution contenant le polymère. Dans cette méthode, de la solution contenant le polymère, est prélevée à la sortie du réacteur. Cette solution est introduite dans une barquette préalablement tarée. La masse de solution est ainsi pesée.

L'échantillon est séché à 140°C, sous la pression réduite de 200 mmHg pendant 15 minutes. La barquette est ensuite placée dans un dessiccateur contenant du gel de silice pendant 2 minutes. La pesée de la barquette permet alors de déterminer la masse de polymère de l'échantillon prélevé. On remonte alors via la concentration en monomères à la conversion à la sortie du réacteur.

$$C = \frac{\frac{m_{extrait\ sec}}{m_{échantillon}}}{\frac{\sum_1^n Mi}{\sum_1^n Qi}} . 100$$

avec

$$\sum_1^n Mi$$

qui représente la somme de toutes les entrées massiques en monomères dans le procédé total (réacteurs 1 à n) et

$$\sum_1^n Qi$$

qui représente la somme de toutes les entrées massiques dans le procédé total (réacteurs 1 à n). *(Solvant, monomères, catalyseurs etc...),*

le rapport $\frac{\sum_1^n Mi}{\sum_1^n Qi}$ correspondant au % massique en monomères

Microstructure des élastomères

La microstructure des élastomères est caractérisée par la technique de spectroscopie proche infrarouge (NIR).

La spectroscopie proche infrarouge (NIR) est utilisée pour déterminer quantitativement le taux massique de styrène dans l'élastomère ainsi que sa microstructure (répartition relative des unités butadiène 1,2, 1,4-trans et 1,4 cis). Le principe de la méthode repose sur la loi de Beer-Lambert généralisée à un système multicomposants. La méthode étant indirecte, elle fait appel à un étalonnage multivarié [Vilmin, F.; Dussap, C.; Coste, N. Applied Spectroscopy 2006, 60, 619-29] réalisé à l'aide d'élastomères étalons de composition déterminée par RMN 13C. Le taux de styrène et la microstructure sont alors calculés à partir du spectre NIR d'un film d'élastomère d'environ 730 μm d'épaisseur. L'acquisition du spectre est réalisée en mode transmission entre 4000 et 6200 cm-1 avec une résolution de 2 cm-1, à l'aide d'un spectromètre proche infrarouge à transformée de Fourier Bruker Tensor 37 équipé d'un détecteur InGaAs refroidi par effet Peltier.

Taux de chaînes fonctionnalisées $(CH_3)_2SiOH$ en extrémité de chaîne par Résonance Magnétique Nucléaire

La RMN $2D^1H-^{29}Si$ permet de vérifier la nature de la fonction grâce aux valeurs de déplacements chimiques des noyaux Silicium et des protons au voisinage $^2J$ (via 2 liaisons). Elle utilise une valeur de constante de couplage $^2J^1H-^{29}Si$ de 8Hz. Le déplacement chimique du silicium de l'espèce $SBR(CH_3)_2SiOH$ en bout de chaine est d'environ 11-12ppm.

La RMN $^1H$ permet de quantifier les groupements méthyl portés par le silicium ($SiCH_3$) par intégration du signal correspondant, situé autour de $\delta$ = 0 ppm. Les échantillons sont solubilisés dans le sulfure de carbone ($CS_2$). 100 μL de cyclohexane deutéré ($C_6D_{12}$) sont ajoutés pour le signal de lock. Les analyses RMN sont réalisées sur un spectromètre 500 MHz BRUKER équipé d'une sonde « large bande » BBIz 5 mm. Pour l'expérience RMN $^1H$ quantitative, la séquence utilise une impulsion 30° et un délai de répétition de 2 secondes.

Le taux de chaînes fonctionnalisées $(CH_3)_2SiOH$ en extrémité de chaîne est calculé par le rapport molaire de la quantité de fonctions déterminée par RMN à la quantité d'initiateur actif introduit.

Outre la fonctionnalisation, ce taux permet également de mettre en évidence le taux de chaînes mortes dans l'élastomère diénique vivant en sortie du réacteur rn, qui est le complément à 100 du taux de chaînes fonctionnalisées.

Viscosité inhérente

La viscosité inhérente des élastomères à 25 °C est déterminée à partir d'une solution d'élastomère à 0,1 $g.dL^{-1}$ dans le toluène, selon le principe suivant :

La viscosité inhérente est déterminée par la mesure du temps d'écoulement t de la solution de polymère et du temps d'écoulement $t_o$ du toluène, dans un tube capillaire.

Dans un tube Ubbelhode (diamètre du capillaire 0,46 mm, capacité 18 à 22 mL), placé dans un bain thermostaté à 25 ± 0,1 °C, le temps d'écoulement du toluène et celui de la solution polymère à 0,1 $g.dL^{-1}$ sont mesurés.

La viscosité inhérente est obtenue par la relation suivante :

$$\eta_{inh} = \frac{1}{C} \ln\left[\frac{(t)}{(t_o)}\right]$$

avec :

- C : concentration de la solution de polymère dans le toluène en $g.dL^{-1}$,
- $t$ : temps d'écoulement de la solution de polymère dans le toluène en seconde,
- $t_o$ : temps d'écoulement du toluène en seconde,
- $\eta_{inh}$ : viscosité inhérente exprimée en $dL.g^{-1}$.

**Exemples**

Dans une installation pilote de polymérisation continue contenant plusieurs réacteurs continus agités, supposés parfaitement agités selon l'homme l'art, sont introduits en continu du méthylcyclohexane, du butadiène, du styrène et du tétrahydrofurfuryl éthyle éther selon les proportions décrites dans chaque exemple. Du n-butyllithium est introduit en quantité suffisante afin de neutraliser les impuretés protiques apportées par les différents constituants présents dans l'entrée de ligne.

Les temps de séjour et les concentrations indiqués en exemple sont calculés à partir des débits des différents constituants entrant dans le procédé de polymérisation.

Pour les exemples 1 à 4, on effectue un prélèvement en sortie du réacteur rn pour déterminer l'indice de

polymolécularité du polymère avant modification. Le prélèvement de polymère vivant est stoppé par introduction de methanol en large excès molaire par rapport à l'initiateur. L'indice de polymolécularité est alors mesuré par chromatographie d'exclusion stérique.

Par ailleurs, en sortie du réacteur rn le flux élastomère est introduit en continu dans un réacteur tubulaire à dispersion axiale approvisionné en continu par un excès d'hexaméthylcyclotrisiloxane dans du cyclohexane pour fonctionnaliser le polymère vivant.

Pour l'exemple 5, on effectue un prélèvement en sortie du réacteur rn pour déterminer l'indice de polymolécularité du polymère avant modification. Le prélèvement de polymère vivant est stoppé par introduction de methanol en large excès molaire par rapport à l'initiateur. L'indice de polymolécularité est alors mesuré par chromatographie d'exclusion stérique.

Par ailleurs, en sortie du deuxième réacteur de polymérisation le flux d'élastomère vivant est introduit en continu dans un dispositif de fonctionnalisation comprenant un mélangeur statique constitué de 36 éléments de type Kenics KMR et un réacteur agité continu de 32,5L, supposé parfaitement agité par l'homme de l'art avec un temps de séjour moyen de 30 minutes. Le dispositif de fonctionnalisation est également approvisionné en continu par du 3-(N,N-diméthylaminopropyl)triméthoxysilane en solution dans le methylcyclohexane avec un rapport molaire contrôlé par rapport au polymère vivant en vue de le coupler.

Pour les exemples 1 à 5, une épuration du butadiène et/ou du solvant est réalisée en continu au moyen d'une colonne d'alumines. Cette colonne est garnie d'un lit fixe d'alumines de type Axsorb 920.

Le rapport L/D du lit fixe minimum est de 4.

Le rapport Diamètre colonne/diamètre moyen particule alumine minimum est de 10.

Le Reynolds en fût vide est supérieur à 2

Le temps de séjour minimum du fluide dans la colonne pleine est de 5,3 minutes.

La colonne est maintenue dans des conditions suivantes :

- Température = 10°C
- Pression = 5 bar.

**Exemple 1**

Une synthèse de polymère butadiène/styrène est effectuée selon un procédé comparatif utilisant 9 réacteurs en série.

Le butadiène réinjecté est épuré en continu sur colonne d'alumines tel que décrit plus haut.

Les conditions opératoires sont précisées dans le tableau 1.

**Tableau 1**

| Conditions opératoires | Valeur | Unité | Réacteur |
|---|---|---|---|
| **Nombre réacteurs** | **9** | **-** | **-** |
| **Volume des réacteurs** | **1,83** | **L** | **1** |
| | **2,411** | | **2** |
| | **2,411** | | **3** |
| | **2,411** | | **4** |
| | **2,411** | | **5** |
| | **2,411** | | **6** |
| | **4,441** | | **7** |
| | **4,441** | | **8** |
| | **4,441** | | **9** |
| **% Styrène (1)** | **45** | **%** | **-** |
| **%massique monomères (2)** | **12,5** | **%** | **-** |
| **Agent polaire (tétrahydrofu rfuryl éthyle éther)** | **$8{,}2.10^{-7}$** | **$Mol/m^3$** | **9** |
| **Initiateur actif (n-butyllithium)** | **$5{,}1.10^{-7}$** | **$Mol/m^3$** | **9** |

(suite)

| Conditions opératoires | Valeur | Unité | Réacteur |
|---|---|---|---|
| **Temps de séjour** | **6,53** | **Min** | **9** |
| **Températu re** | **60** | **°C** | **1,2,3,4,5,6,7,8,9** |
| **Réinjection butadiène (3)** | **8** | **%** | **7** |
| **Conversion massique globale (4)** | **8** | **%** | **1** |
| | 26,9 | **%** | **3** |
| | 47,1 | **%** | **6** |
| | 70,3 | **%** | **9** |
| *(1) en poids par rapport à la somme de toutes les entrées massiques en monomères du procédé*<br>*(2) en poids par rapport à la somme de toutes les entrées massiques du procédé*<br>*(3) en poids par rapport au poids total des monomères injectés dans l'ensemble des réacteurs*<br>*(4) conversion massique globale dans le réacteur* | | | |

Les caractéristiques du polymère obtenu en sortie du réacteur 9 sont données dans le tableau 2.

**Tableau 2**

| | | |
|---|---|---|
| Taux vinyl (5) | **24,0** | % |
| Taux styrène (6) | **28,5** | % |
| Tg | **-46,3** | °C |
| Ip | **1,22** | - |
| Mn | **127,0** | kg/mol |
| Quantité de fonctions | **7,3** | mmol/kg |
| Taux polymère vivant (7) | **95,8** | % |
| *(5) en poids du poids total des motifs butadiène introduits dans l'ensemble des réacteurs*<br>*(6) en poids du poids total de l'ensemble des monomères introduits dans l'ensemble des réacteurs*<br>*(7) Rapport molaire entre la quantité de fonctions déterminée par RMN et la quantité d'initiateur actif introduit.* | | |

## Exemple 2

Une synthèse de polymère styrène/butadiène est effectuée selon un procédé selon l'invention utilisant 6 réacteurs en série.

Le butadiène réinjecté est épuré en continu par colonne d'alumine tel que décrit plus haut. Les conditions opératoires sont précisées dans le tableau 3.

**Tableau 3**

| Conditions opératoires | Valeur | Unité | Réact eur |
|---|---|---|---|
| **Nombre *réacteurs*** | **6** | **-** | **-** |
| **Volume des réacteurs** | **2,411** | **L** | **1** |
| | **2,411** | | **2** |
| | **2,411** | | **3** |
| | **4,441** | | **4** |
| | **4,441** | | **5** |
| | **4,441** | | **6** |
| **% Styrène (1)** | **45** | **%** | |

(suite)

| Conditions opératoires | Valeur | Unité | Réact eur |
|---|---|---|---|
| **%massique monomères (2)** | **12,5** | **%** | **-** |
| **Agent polaire (tétrahydrofurfuryl éthyle éther)** | **$8,2.10^{-7}$** | **$Mol/m^3$** | **6** |
| **Initiateur actif (n-butyl-lithium)** | **$5,1.10^{-7}$** | **$Mol/m^3$** | **6** |
| **Temps de séjour** | **9,49** | **Min** | **6** |
| **Température** | **55** | **°C** | **1** |
| | **55** | | **2** |
| | **55** | | **3** |
| | **65** | | **4** |
| | **65** | | **5** |
| | **65** | | **6** |
| **Réinj ection butadiène (3)** | **8** | **%** | **4** |
| **Conversion massique globale (4)** | 10,0 | **%** | **1** |
| | 33,8 | **%** | **3** |
| | 64,4 | **%** | **6** |

*(1) en poids par rapport à la somme de toutes les entrées massiques en monomères du procédé*
*(2) en poids par rapport à la somme de toutes les entrées massiques du procédé*
*(3) en poids par rapport au poids total des monomères injectés dans l'ensemble des réacteurs*
*(4) conversion massique globale dans le réacteur*

Les caractéristiques du polymère obtenu en sortie du réacteur 6 sont données dans le tableau 4.

**Tableau 4**

| | | |
|---|---|---|
| Taux vinyl (5) | **23,2** | % |
| Taux styrène (6) | **29,0** | % |
| Tg | **-45,9** | °C |
| Mn | **123,4** | kg/mol |
| IP | **1,26** | - |
| Quantité de fonctions | **7,98** | mmol/kg |
| Taux polymère vivant (7) | **95,9** | % |

*(5) en poids du poids total des motifs butadiène introduits dans l'ensemble des réacteurs*
*(6) en poids du poids total de l'ensemble des monomères introduits dans l'ensemble des réacteurs*
*(7) Rapport molaire entre la quantité de fonctions déterminée par RMN et la quantité d'initiateur actif introduit.*

Ainsi, cet exemple montre qu'il est possible de synthétiser un polymère fonctionnel d'indice de polymolécularité réduit à partir d'un procédé polytherme à 6 réacteurs en série.

Grâce à la rampe de température, les conversions sont équilibrées (taux de 30% entre les réacteurs 1 et 3 et entre les réacteurs 3 et 6) et permettent d'obtenir un Ip équivalent à celui obtenu par la synthèse à 9 réacteurs de l'exemple 1, pourtant a priori plus efficace pour réduire l'Ip du fait du nombre de réacteurs plus élevé.

La rampe de température permet donc de maintenir un indice de polymolécularité réduit en diminuant le nombre de réacteurs. Ceci a un fort impact sur le coût du procédé et donc sur l'aspect économique de son industrialisation.

## Exemple 3

L'objet de cet exemple est de comparer deux synthèses d'un polymère butadiène/styrène fonctionnalisé effectuées au moyen de deux réacteurs de polymérisation en série et d'un réacteur de fonctionnalisation.

Lors de la première synthèse de polymère fonctionnalisé, la polymérisation ne comprend pas de réinjection de monomère dans le second réacteur.

La seconde synthèse de polymère fonctionnalisé est effectuée selon un procédé avec réinjection de monomères selon l'invention. Le solvant et le butadiène réinjectés dans le deuxième réacteur lors de la polymérisation, sont épurés en continu sur colonnes d'alumine tel que décrit plus haut.

Les conditions opératoires sont précisées dans le tableau 5.

**Tableau 5**

| Conditions opératoires | Valeur synthèse 1 | Valeur synthèse 2 | Unité | Réacteur |
|---|---|---|---|---|
| **Nombre réacteurs** | **2** | **2** | - | **-** |
| **Volume des réacteurs** | **14** | **14** | **L** | **1** |
| | **14** | **14** | | **2** |
| **%styrène (1)** | **40** | **40** | **%** | - |
| **%massique monomères** (2) | **13** | **13** | **%** | **1** |
| **Agent polaire (tétrahydrofurfuryl éthyle éther)** | **$5,8.10^{-7}$** | **5,8.10-7** | **$Mol/m^3$** | **2** |
| **Initiateur actif** (**n-butyllithium)** | **$8,5.10^{-7}$** | **$8,5.10^{-7}$** | **$Mol/m^3$** | **2** |
| **Temps de séjour** | **30** | **30** | **Min** | **2** |
| **Température** | **5**0 | **50** | **°C** | **1** |
| **Température** | **60** | **60** | **°C** | **2** |
| **Réinjection solvant (3)** | **0** | **10** | **%** | **2** |
| **Réinjection butadiène (4)** | **0** | **50** | **%** | **2** |
| **Conversion massique monomères (5)** | 76,6 | 55,8 | **%** | **1** |
| | 96,1 | 93,6 | **%** | **2** |

*(1) en poids par rapport à la somme de toutes les entrées massiques en monomères du procédé*
*(2) en poids par rapport à la somme de toutes les entrées massiques du procédé*
*(3) En poids par rapport à la somme de toutes les entrées de solvant du procédé.*
*(4) en poids par rapport au poids total des monomères injectés dans l'ensemble des réacteurs*
*(5) conversion massique globale dans le réacteur*

Les caractéristiques des polymères obtenus en sortie du réacteur 2 sont données dans le tableau 6.

**Tableau 6**

| | Synthèse 1 | Synthèse 2 | Unité |
|---|---|---|---|
| Taux vinyl (6) | **49,0** | **49,1** | % |
| Taux styrène (7) | **39,5** | **38,4** | % |
| Tg | **-14,1** | **-15,4** | °C |
| Mn | **111,0** | **113,1** | kg/mol |
| IP | **1,65** | **1,53** | - |
| Quantité de fonctions | **8,80** | **8,84** | mmol/kg |
| Taux polymère vivant (8) | **98,5** | **96,3** | % |

*(6) en poids du poids total des motifs butadiène introduits dans l'ensemble des réacteurs*
*(7) en poids du poids total de l'ensemble des monomères introduits dans l'ensemble des réacteurs*
*(8) Rapport molaire entre la quantité de fonctions dosées par RMN et la quantité d'initiateur actif introduit.*

La synthèse 2 présente des conversions plus équilibrées entre le réacteur 1 et 2 que la synthèse 1.

De cette façon, le polymère fonctionnalisé synthétisé au moyen de la synthèse 2 avec réinjection de monomères possède un Ip plus bas que celui de la synthèse 1 effectuée sans réinjection de monomères, tout en maintenant un taux de fonctionnalisation équivalent.

## Exemple 4

L'objet de cet exemple est de quantifier l'impact de l'épuration de butadiène sur le taux de polymère vivant en sortie de polymérisation.

La première synthèse comporte une réinjection en continu de butadiène non épuré lors de la polymérisation. Le butadiène non épuré contient en impureté majoritaire du terbutylcathéchol (TBC) à hauteur de 300 ppm. La deuxième synthèse comporte, lors de la polymérisation, une réinjection en continu de butadiène épuré par flash dans les conditions de température et pression suivantes :

P =1,1 bar
T = 50°C

Le solvant réinjecté dans les deux synthèses est épuré en continu par colonne d'alumines.

Les conditions opératoires sont précisées dans le tableau 7.

**Tableau 7**

| Conditions opératoires | Valeur synthèse 1 | Valeur synthèse 2 | Unité | Réacteur |
|---|---|---|---|---|
| **Nombre réacteurs** | **2** | **2** | **-** | **-** |
| **Volume des réacteurs** | **32,5** | **32,5** | **L** | **1** |
| | **32,5** | **32,5** | | **2** |
| **%styrène (1)** | **35** | **35** | **%** | **-** |
| **%massique monomères (2)** | **13** | **13** | **%** | **1** |
| **Agent polaire (tétrahydrofurfuryl éthyle éther)** | **$1,9.10^{-7}$** | **$1,9.10^{-7}$** | **$Mol/m^3$** | **2** |
| **Initiateur actif (n-butyllithium)** | **$7,6.10^{-7}$** | **$7,6.10^{-7}$** | **$Mol/m^3$** | **2** |
| **Temps de séjour** | **30** | **30** | **Min** | **2** |
| **Température** | **40** | **40** | **°C** | **1** |
| **Température** | **70** | **70** | **°C** | **2** |
| **Réinjection solvant (3)** | **10** | **10** | **%** | **2** |
| **Réinjection butadiène (4)** | **19,5** | **19,5** | **%** | **2** |
| **Conversion massique monomères (5)** | 39,0 | 38,3 | **%** | **1** |
| | 86,7 | 86,6 | **%** | **2** |

*(1) en poids par rapport à la somme de toutes les entrées massiques en monomères du procédé*
*(2) en poids par rapport à la somme de toutes les entrées massiques du procédé*
*(3) En poids par rapport à la somme de toutes les entrées de solvant du procédé.*
*(4) en poids par rapport au poids total des monomères injectés dans l'ensemble des réacteurs*
*(5) conversion massique globale dans le réacteur*

Les caractéristiques des polymères obtenus en sortie du réacteur 2 sont données dans le tableau 8.

**Tableau 8**

| | Synthèse 1 | Synthèse 2 | Unité |
|---|---|---|---|
| Taux vinyl (6) | **36,2** | **36,8** | % |
| Taux styrène (7) | **29,4** | **29,6** | % |

(suite)

| | Synthèse 1 | Synthèse 2 | Unité |
|---|---|---|---|
| Tg | **-37,0** | **-36,3** | °C |
| Mn | **111,5** | **110,8** | kg/mol |
| IP | **1,50** | **1,51** | - |
| Quantité de fonctions | **8,2** | **8,74** | mmol/kg |
| Taux polymère vivant (8) | **92,6** | **98,6** | % |
| *(6) en poids du poids total des motifs butadiène introduits dans l'ensemble des réacteurs*<br>*(7) en poids du poids total de l'ensemble des monomères introduits dans l'ensemble des réacteurs*<br>*(8) Rapport molaire entre la quantité de fonctions déterminée par RMN et quantité d'initiateur actif introduit.* | | | |

Nous pouvons donc voir que l'épuration du butadiène a un impact fort sur le taux de polymère vivant mesuré par la méthode décrite précédemment. Le taux de polymère vivant correspond également au taux de chaînes fonctionnelles. Nous pouvons donc conclure que le procédé avec une réinjection de butadiène épuré permet une fonctionnalisation plus efficace.

**Exemple 5**

L'objet de cet exemple est de d'illustrer la fonctionnalisation d'un élastomère d'IP réduit par un agent de couplage.

La synthèse du polymère comporte une réinjection de butadiène épuré en continu par flash dans les conditions de température et pression suivantes :

P =1,1 bar
T = 50°C

Le solvant réinjecté est épuré en continu par colonne d'alumines tel que décrit plus haut.

Les conditions opératoires sont précisées dans le tableau 9.

**Tableau 9**

| Conditions opératoires | Valeur synthèse 1 | Unité | Réacteur |
|---|---|---|---|
| **Nombre réacteurs** | **2** | **-** | **-** |
| **Volume des réacteurs** | **32,5** | **L** | **1** |
| | **32,5** | | **2** |
| **%styrène (1)** | **35** | **%** | **-** |
| **%massique monomères (2)** | **13** | **%** | **1** |
| **Agent polaire (tétrahydrofurfuryl éthyle éther)** | **$3{,}2.10^{-7}$** | **$Mol/m^3$** | **2** |
| **Initiateur actif (n-butyl-lithium)** | **$7{,}2.10^{-7}$** | **$Mol/m^3$** | **2** |
| **Temps de séjour** | **30** | **Min** | **2** |
| **Température** | **35** | **°C** | **1** |
| **Température** | **52** | **°C** | **2** |
| **Réinjection solvant (3)** | **10** | **%** | **2** |
| **Réinjection butadiène (4)** | **15** | **%** | **2** |
| **Conversion massique monomères (5)** | **43,2** | **%** | **1** |
| | **81,3** | **%** | **2** |

(suite)

| Conditions opératoires | Valeur synthèse 1 | Unité | Réacteur |
|---|---|---|---|
| **Rapport molaire Agent couplage/polymère vivant** | **0,55** | **-** | **Sortie réacteur 2** |
| *(1) en poids par rapport à la somme de toutes les entrées massiques en monomères du procédé*<br>*(2) en poids par rapport à la somme de toutes les entrées massiques du procédé*<br>*(3) En poids par rapport à la somme de toutes les entrées de solvant du procédé.*<br>*(4) en poids par rapport au poids total des monomères injectés dans l'ensemble des réacteurs*<br>*(5) conversion massique globale dans le réacteur* | | | |

Les caractéristiques des polymères obtenus en sortie du réacteur 2 sont données dans le tableau 10.

**Tableau 10**

| | Synthèse 1 | Unité |
|---|---|---|
| Taux vinyl (6) | 50,6 | % |
| Taux styrène (7) | 31,8 | % |
| Tg | -22,7 | °C |
| Mn | 115100 | kg/mol |
| IP | 1,52 | - |
| Viscosité sortie polymérisation | 1,41 | dL/g |
| *(6) en poids du poids total des motifs butadiène introduits dans l'ensemble des réacteurs*<br>*(7) en poids du poids total de l'ensemble des monomères introduits dans l'ensemble des réacteurs* | | |

La viscosité à la sortie du dispositif de fonctionnalisation est de 1,89 dL/g. Le saut de viscosité, défini comme le rapport de la viscosité "finale" en sortie de fonctionnalisation sur la viscosité "initiale" en fin de polymérisation, supérieur à 1 montre que l'on a un couplage des chaines polymères d'IP réduit.

## Revendications

**1.** Procédé de synthèse en continu d'un élastomère diénique modifié comprenant au moins un atome de silicium directement relié à la chaîne élastomère, comprenant :

a) une étape de polymérisation au moyen de n réacteurs r1 à rn, équipés d'un système d'agitation interne, supposés parfaitement agités, disposés en série, n variant de 2 à 15, de préférence de 2 à 9, le réacteur r1 étant alimenté par une solution d'entrée comprenant un solvant, un ou plusieurs monomères, un initiateur de polymérisation anionique et un agent polaire, un ou plusieurs des réacteur(s) r2 à rn étant en outre alimenté(s) par réinjection d'une solution purifiée comprenant du solvant et/ou du ou des monomères, la pureté de la ou de chaque solution réinjectée étant telle que la proportion du nombre de chaînes mortes dans le flux en sortie du réacteur rn est inférieure à 30%, de préférence inférieure à 10 %, du nombre de chaînes vivantes initiées dans le réacteur r1, la température de chaque réacteur variant de 20 à 150°C, de préférence variant de 30 à 120°C et étant supérieure ou égale à la température du réacteur qui le précède immédiatement, la température du réacteur rn étant supérieure à la température du réacteur r1,
la quantité massique $M_1$ de monomère(s) introduit(s) dans le réacteur r1 étant telle que

$$0,1 < \frac{M1}{\sum_{i=1}^{n} Mi} \leq 1$$

la quantité massique $M_{i'}$ de monomère(s) réinjecté(s) dans le réacteur ri', lorsque $M_{i'} \neq 0$, i' variant de 2 à n, étant telle que

$$0 \leq \frac{Mi'}{\sum_1^n Mi} < 0{,}9$$

et telle que Mi’ représente de 5 à 100% en masse de la masse de la solution réinjectée dans le réacteur ri’, lorsque $M_{i'} \neq 0$,
où Mi est la quantité massique de monomère(s) introduit(s) dans le réacteur ri, i variant de 1 à n,
la quantité massique de l’ensemble des monomères rentrant dans les réacteurs r1 à rn représentant 5 à 25% en masse de la somme des entrées massiques totales des réacteurs r1 à rn,
la conversion massique globale Ci" dans chaque réacteur ri" étant telle que

$$\frac{Cn}{n} - 0{,}2 < \frac{Ci''}{i''} < \frac{Cn}{n} + 0{,}2$$

où

$$Ci'' = \frac{Pi''}{\sum_1^n Mi}$$

où Pi" est la masse de polymère formé à la sortie du réacteur ri", i" variant de 1 à n-1,
Cn est la conversion massique globale dans le réacteur rn, avec

$$Cn = \frac{Pn}{\sum_1^n Mi}$$

où Pn est la masse de polymère formé à la sortie du réacteur rn,

b) une étape de modification de l’élastomère diénique vivant obtenu à l’étape précédente et présentant un indice de polymolécularité variant de 1,1 à 2, de préférence variant de 1,1 à moins de 1,7, plus préférentiellement variant de 1,2 à 1,6, au moyen d’au moins un agent de fonctionnalisation, de couplage ou d’étoilage, qui permet d’introduire dans l’élastomère un groupement fonctionnel comprenant au moins un atome de silicium directement relié à la chaîne élastomère.

**2.** Procédé selon la revendication 1, **caractérisé en ce que** n=2.

**3.** Procédé selon la revendication 1 ou 2 **caractérisé en ce que** le ou chaque constituant de la ou des solutions réinjectées est, avant réinjection, purifié indépendamment par adsorption, extraction liquide/liquide, extraction gaz/liquide ou distillation.

**4.** Procédé selon la revendication 3, **caractérisé en ce que** les résidus du ou des procédés d’épuration du ou de chaque constituant sont réinjectés dans la solution d’entrée alimentant le premier réacteur.

**5.** Procédé selon l’une quelconque des revendications 1 à 4, **caractérisé en ce que** l’agent de fonctionnalisation, de couplage ou d’étoilage, qui permet d’introduire dans l’élastomère un groupement fonctionnel comprenant au moins un atome de silicium directement relié à la chaîne élastomère, est au moins un polysiloxane cyclique répondant à la formule 1 :

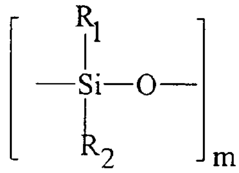

**Formule 1**

avec m représente un nombre entier de valeur allant de 3 à 8, de préférence 3, R1 et R2, identiques ou différents, représentent un radical alkyle de 1 à 10 atomes de carbone, de préférence un radicale alkyle ayant 1 à 4 atomes de carbone, tel que l'hexaméthylcyclotrisiloxane.

**6.** Procédé selon l'une quelconque des revendications 1 à 4, **caractérisé en ce que** l'agent de fonctionnalisation, de couplage ou d'étoilage, qui permet d'introduire dans l'élastomère un groupement fonctionnel comprenant au moins un atome de silicium directement relié à la chaîne élastomère, est au moins un composé répondant à la formule 2 :

$SiR1_p(OR')_{4-p-q}(R3-X)_q$,

dans laquelle,

- R3 est un radical hydrocarboné divalent aliphatique, saturé ou non, cyclique ou non, en $C_1$-$C_{18}$, aromatique en $C_6$-$C_{18}$, de préférence un radical hydrocarboné divalent, linéaire ou ramifié, aliphatique en $C_1$-$C_{10}$, plus préférentiellement un radical hydrocarboné divalent linéaire aliphatique en $C_1$-$C_6$, plus préférentiellement encore le radical hydrocarboné linéaire en $C_2$ ou $C_3$ ;
- X est un atome d'hydrogène ou une fonction susceptible d'interagir avec une charge renforçante ;
- les radicaux R', substitués ou non substitués, identiques ou différents, représentent un groupe alkyle en $C_1$-$C_{10}$, voire en $C_1$-$C_8$, de préférence un groupe alkyle en $C_1$-$C_4$, plus préférentiellement méthyle et éthyle ;
- les radicaux R1, substitués ou non substitués, identiques ou différents, représentent un groupe alkyle en $C_1$-$C_{10}$, voire en $C_1$-$C_8$ ;
- p représente un nombre entier de valeur allant de 0 à 2, q représente un nombre entier de valeur 0 ou 1, sous réserve que $p+q \leq 2$.

**7.** Procédé selon la revendication 6, **caractérisé en ce que** l'agent de fonctionnalisation, de couplage ou d'étoilage ne comporte pas d'autre fonction que celle comprenant l'atome de silicium de type alcoxysilane.

**8.** Procédé selon la revendication 6, **caractérisé en ce que** l'agent de fonctionnalisation de formule 2 comporte une fonction supplémentaire à celle comprenant l'atome de silicium, comprenant au moins un hétéroatome choisi parmi N, S, O, P.

**9.** Procédé selon la revendication 8, **caractérisé en ce que** cette fonction supplémentaire est une amine primaire protégée ou non, secondaire protégée ou non ou tertiaire, cyclique ou non, un isocyanate, un imine, un cyano, la fonction thiol protégée ou non, un carboxylate, un époxyde, une phosphine primaire protégée ou non, secondaire protégée ou non, ou tertiaire.

**10.** Procédé selon la revendication 9, **caractérisé en ce que** cette fonction supplémentaire est une amine choisie parmi les 3-(N,N-dialkylaminopropyl)trialcoxysilane, les 3-(N,N-dialkylaminopropyl)alkyldialcoxysilane, les 3-alkyltriméthylsilylaminopropyl)trialcoxysilane, les 3-alkyltriméthylsilylaminopropyl)alkyldialcoxysilane, les 3-bistriméthylsilylaminopropyl)trialcoxysilane, les 3-bistriméthylsilylaminopropyl)alkyldialcoxysilane, les groupements alkyl étant méthyl ou éthyl et les groupements alcoxy étant methoxy ou éthoxy

**11.** Procédé selon la revendication 9, **caractérisé en ce que** cette fonction supplémentaire est une fonction thiol, protégée ou non, choisie parmi les (S-trialkylsilylmercaptopropyl)trialcoxysilanes, les (S-trialkylsilylmercaptopropyl)alkyldialcoxysilanes, (S-trialkylsilylmercaptoéthyl)trialcoxysilanes et les (S-trialkylsilylmercaptoéthyl)alkyldialcoxysilanes, le groupement alkyl sur l'atome de silicium porteur des groupements alcoxysilanes étant le groupement méthyl ou éthyl, le groupement alcoxy étant le groupement méthoxy ou éthoxy, et le groupement alkyl sur le silicium lié à l'atome de soufre étant le groupement méthyl ou tert-butyl.

**12.** Procédé selon l'une quelconque des revendications 1 à 11, **caractérisé en ce qu'**il comprend une étape complémentaire de couplage ou d'étoilage au moyen d'un agent de couplage ou d'étoilage à base de dérivés de l'étain ou de silicium de formule MRxX4-x, dans laquelle M représente un atome Sn ou Si, x représente un nombre entier de valeur 0 à 2, de préférence de valeur 0 à 1, R représente un radical alkyle de 1 à 10 atomes de carbone, de préférence un radicale alkyle ayant 1 à 4 atomes de carbone, et X est un atome d'halogène, de préférence le chlore, tels que le tétrachlorure d'étain, le trichlorure de méthyl étain, le dichlorure de diméthyl étain, le tétrachlorosilane, le méthyltrichlorosilane et le diméthyldichlorosilane.

**13.** Procédé selon l'une quelconque des revendications précédentes **caractérisé en ce que** les monomères sont le butadiène et un monomère vinylaromatique, notamment du styrène.

## Patentansprüche

**1.** Verfahren zur kontinuierlichen Synthese eines modifizierten Dienelastomers, umfassend mindestens ein Siliciumatom, das direkt an die Elastomerkette gebunden ist, umfassend:

a) einen Schritt der Polymerisation mit mindestens n Reaktoren r1 bis rn, die mit einem internen Rührsystem ausgestattet sind, perfekt bewegt werden sollen, in Serie angeordnet sind, wobei n von 2 bis 15 variiert, vorzugsweise von 2 bis 9, wobei der Reaktor r1 mit einer Eintrittslösung gespeist wird, umfassend ein Lösungsmittel, ein oder mehrere Monomere, einen anionischen Polymerisationsinitiator und ein polares Mittel, wobei einer oder mehrere der Reaktoren r2 bis rn außerdem durch Reinjektion einer gereinigten Lösung gespeist wird oder werden, umfassend ein Lösungsmittel und/oder ein Monomer oder Monomere, wobei die Reinheit der oder jeder reinjizierten Lösung derart ist, dass der Anteil der Anzahl toter Ketten in dem Strom am Ausgang des Reaktors rn kleiner ist als 30 %, vorzugsweise kleiner als 10 %, der Anzahl lebender Ketten, die in dem Reaktor r1 initiiert werden, wobei die Temperatur jedes Reaktors von 20 bis 150°C variiert, vorzugsweise von 30 bis 120°C variiert und größer oder gleich der Temperatur des Reaktors ist, der diesem unmittelbar vorausgeht, wobei die Temperatur des Reaktors rn größer ist als die Temperatur des Reaktors r1,
wobei die Massenmenge $M_1$ des (der) Monomers (Monomere), das (die) in den Reaktor r1 eingebracht wird (werden), derart ist, dass

$$0,1 < \frac{M1}{\sum_{i=1}^{n} Mi} \leq 1$$

wobei die Massenmenge $M_{i'}$ des (der) Monomers (Monomere), das (die) in den Reaktor ri' reinjiziert wird (werden), wenn $M_{i'}$, $\neq 0$, wobei i' von 2 bis n variiert, derart ist, dass

$$0 \leq \frac{Mi'}{\sum_{1}^{n} Mi} < 0,9$$

und derart, dass $M_{i'}$ von 5 bis 100 Masse-% der Masse der Lösung darstellt, die in den Reaktor ri' reinjiziert wird, wenn $M_{i'} \neq 0$,
wobei Mi die Massenmenge des (der) Monomers (Monomere) ist, das (die) in den Reaktor ri eingebracht wird (werden), wobei i von 1 bis n variiert,
wobei die Massenmenge der Gesamtheit der Monomere, die in die Reaktoren r1 bis rn zurückgeführt werden, 5 bis 25 Masse-% der Summe der gesamten Masseneinbringungen in die Reaktoren r1 bis rn ausmacht,
wobei die globale Massenumwandlung Ci" in jedem Reaktor ri" derart ist, dass

$$\frac{Cn}{n} - 0,2 < \frac{Ci''}{i''} < \frac{Cn}{n} + 0,2$$

wobei

$$Ci'' = \frac{Pi''}{\sum_1^n Mi}$$

wobei Pi" die Masse des gebildeten Polymers am Ausgang des Reaktors ri" ist, wobei i" von 1 bis n-1 variiert, Cn die globale Massenumwandlung in dem Reaktor rn ist, wobei

$$Cn = \frac{Pn}{\sum_1^n Mi}$$

wobei Pn die Masse des gebildeten Polymers am Ausgang des Reaktors rn ist,

b) einen Schritt der Modifikation des lebenden Dienelastomers, das im vorhergehenden Schritt erhalten wird und einen Polymolekularitätsindex aufweist, der von 1,1 bis 2 variiert, vorzugsweise von 1,1 bis weniger als 1,7 variiert, bevorzugter von 1,2 bis 1,6 variiert, mit mindestens einem Funktionalisierungs-, Kopplungs- oder Fixierungsmittel, das es gestattet, in das Elastomer eine funktionelle Gruppe einzuführen, umfassend mindestens ein Siliciumatom, das direkt an die Elastomerkette gebunden ist.

**2.** Verfahren nach Anspruch 1,
**dadurch gekennzeichnet, dass** n = 2.

**3.** Verfahren nach Anspruch 1 oder 2,
**dadurch gekennzeichnet, dass** der oder jeder Bestandteil der reinjizierten Lösung oder Lösungen, vor der Reinjektion, unabhängig durch Adsorption, Flüssig/Flüssig-Extraktion, Gas/Flüssig-Extraktion oder Destillation gereinigt wird.

**4.** Verfahren nach Anspruch 3,
**dadurch gekennzeichnet, dass** die Rückstände des oder der Reinigungsprozesse des oder jedes Bestandteils in die Eintrittslösung reinjiziert werden, die den ersten Reaktor speist.

**5.** Verfahren nach einem der Ansprüche 1 bis 4,
**dadurch gekennzeichnet, dass** das Funktionalisierungs-, Kopplungs- oder Fixierungsmittel, welches das Einführen einer funktionellen Gruppe in das Elastomer gestattet, umfassend mindestens ein Siliciumatom, das direkt an die Elastomerkette gebunden ist, mindestens ein cyclisches Polysiloxan mit der Formel 1 ist:

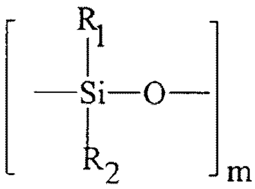

Formel 1

wobei m eine ganze Zahl darstellt, deren Wert von 3 bis 8 beträgt, vorzugsweise 3, R1 und R2, identisch oder verschieden, einen Alkylrest mit 1 bis 10 Kohlenstoffatomen darstellen, vorzugsweise einen Alkylrest mit 1 bis 4 Kohlenstoffatomen, wie Hexamethylcyclotrisiloxan.

**6.** Verfahren nach einem der Ansprüche 1 bis 4,
**dadurch gekennzeichnet, dass** das Funktionalisierungs-, Kopplungs- oder Fixierungsmittel, welches das Einführen einer funktionellen Gruppe in das Elastomer gestattet, umfassend mindestens ein Siliciumatom, das direkt an die Elastomerkette gebunden ist, mindestens eine Verbindung mit der Formel 2 ist:

$SiR1_p(OR')_{4-p-q}(R3-X)_q$,

wobei:

- R3 ein zweiwertiger aliphatischer, gesättigter oder ungesättigter, cyclischer oder nicht cyclischer $C_1$-$C_{18}$-, aromatischer $C_6$-$C_{18}$-Kohlenwasserstoffrest ist, vorzugsweise ein zweiwertiger linearer oder verzweigter, aliphatischer $C_1$-$C_{10}$-Kohlenwasserstoffrest, bevorzugt ein zweiwertiger linearer aliphatischer $C_1$-$C_6$-Kohlenwasserstoffrest, noch mehr bevorzugt ein linearer $C_2$- oder $C_3$-Kohlenwasserstoffrest;
- X ein Wasserstoffatom oder eine Funktion ist, die mit einer verstärkenden Charge interagieren kann;
- die Reste R', substituiert oder unsubstituiert, identisch oder verschieden, eine $C_1$-$C_{10}$-, sogar $C_1$-$C_8$-Alykl-gruppe darstellen, vorzugsweise eine $C_1$-$C_4$-Alkylgruppe, bevorzugter Methyl und Ethyl;
- die Reste R1, substituiert oder unsubstituiert, identisch oder verschieden, eine $C_1$-$C_{10}$-, sogar $C_1$-$C_8$-Alykl-gruppe darstellen;
- p eine ganze Zahl mit einem Wert darstellt, der von 0 bis 2 beträgt, q eine ganze Zahl mit einem Wert von 0 oder 1 darstellt, mit der Maßgabe, dass $p+q \leq 2$.

**7.** Verfahren nach Anspruch 6,
**dadurch gekennzeichnet, dass** das Funktionalisierungs-, Kopplungs- oder Fixierungsmittel keine andere Funktion als jene umfasst, die das Siliciumatom des Typs Alkoxysilan umfasst.

**8.** Verfahren nach Anspruch 6,
**dadurch gekennzeichnet, dass** das Funktionalisierungsmittel mit der Formel 2 eine ergänzende Funktion zu jener umfasst, die das Siliciumatom umfasst, umfassend mindestens ein Heteroatom, ausgewählt aus N, S, 0, P.

**9.** Verfahren nach Anspruch 8,
**dadurch gekennzeichnet, dass** diese ergänzende Funktion ein primäres Amin ist, geschützt oder ungeschützt, ein sekundäres Amin, geschützt oder ungeschützt, oder ein tertiäres Amin, cyclisch oder nicht cyclisch, ein Isocyanat, ein Imin, ein Cyano, eine Thiol-Funktion, geschützt oder ungeschützt, ein Carboxylat, ein Epoxid, ein primäres Phosphin, geschützt oder ungeschützt, ein sekundäres Phosphin, geschützt oder ungeschützt, oder ein tertiäres Phosphin.

**10.** Verfahren nach Anspruch 9,
**dadurch gekennzeichnet, dass** diese ergänzende Funktion ein Amin ist, ausgewählt aus 3-(N,N-Dialkylaminopropyl)-trialkoxysilan, 3-(N,N-Dialkylaminopropyl)-alkyldialkoxysilan, 3-(Alkyltrimethylsilylaminopropyl)-trialkoxysilan, 3-(Alkyltrimethylsilylaminopropyl)-alkyldialkoxysilan, 3-bis-(Trimethylsilylaminopropyl)-trialkoxysilan, 3-bis-(Trimethylsilylaminopropyl)-alkyldialkoxysilan, wobei die Alkylgruppen Methyl oder Ethyl sind, und die Alkoxygruppen Methoxy oder Ethoxy sind.

**11.** Verfahren nach Anspruch 9,
**dadurch gekennzeichnet, dass** diese ergänzende Funktion eine Thiol-Funktion ist, geschützt oder ungeschützt, ausgewählt aus (S-Trialkylsilylmercaptopropyl)-trialkoxysilanen, (S-Trialkylsilylmercaptopropyl)-alkyldialkoxysilanen, (S-Trialkylsilylmercaptoethyl)-trialkoxysilanen und (S-Trialkylsilylmercaptoethyl)-alkyldialkoxysilanen, wobei die Alkylgruppe an dem Siliciumatom, das die Alkoxysilangruppen trägt, eine Methyl- oder Ethylgruppe ist, die Alkoxygruppe eine Methoxy- oder Ethoxygruppe ist, und die Alkylgruppe an dem Siliciumatom, das an das Schwefelatom gebunden ist, eine Methyl- oder tert-Butylgruppe ist.

**12.** Verfahren nach einem der Ansprüche 1 bis 11,
**dadurch gekennzeichnet, dass** dieses einen komplementären Schritt der Kopplung oder Fixierung mit einem Kopplungs- oder Fixierungsmittel auf der Basis von Zinn- oder Siliciumderivaten mit der Formel MRxX4-x umfasst, wobei M ein Sn- oder Si-Atom darstellt, x eine ganze Zahl mit einem Wert von 0 bis 2 darstellt, vorzugsweise mit einem Wert von 0 bis 1, R einen Alkylrest mit 1 bis 10 Kohlenstoffatomen darstellt, vorzugsweise einen Alkylrest mit 1 bis 4 Kohlenstoffatomen, und X ein Halogenatom ist, vorzugsweise Chlor, wie Zinntetrachlorid, Methylzinntrichlorid, Dimethylzinndichlorid, Tetrachlorsilan, Methyltrichlorsilan und Dimethyldichlorsilan.

**13.** Verfahren nach einem der vorhergehenden Ansprüche,
**dadurch gekennzeichnet, dass** die Monomere Butadien und ein vinylaromatisches Monomer, insbesondere Styrol, sind.

## Claims

1. Process for the continuous synthesis of a modified diene elastomer comprising at least one silicon atom directly connected to the elastomer chain, comprising:

a) a stage of polymerization by means of n reactors r1 to rn which are equipped with an internal stirring system, which are assumed perfectly stirred and which are arranged in series, n varying from 2 to 15, preferably from 2 to 9, the reactor r1 being fed by an input solution comprising a solvent, one or more monomers, an anionic polymerization initiator and a polar agent, one or more of the reactors r2 to rn additionally being fed by reinjection of a purified solution comprising solvent and/or monomer(s), the purity of the or of each reinjected solution being such that the proportion of the number of dead chains in the output stream from the reactor rn is less than 30%, preferably less than 10%, of the number of living chains initiated in the reactor r1, the temperature of each reactor varying from 20°C to 150°C, preferably varying from 30°C to 120°C, and being greater than or equal to the temperature of the reactor which immediately precedes it, the temperature of the reactor rn being greater than the temperature of the reactor r1,
the amount by weight W1 of monomer(s) introduced into the reactor r1 being such that:

$$0.1 < \frac{W1}{\sum_{i=1}^{n} Wi} \leq 1$$

the amount by weight Wi' of monomer(s) reinjected into the reactor ri', when Wi' ≠ 0, i' varying from 2 to n, being such that:

$$0 \leq \frac{Wi'}{\sum_{1}^{n} Wi} < 0.9$$

and such that Wi' represents from 5% to 100% by weight of the weight of the solution reinjected into the reactor ri', when Wi' ≠ 0,
where Wi is the amount by weight of monomer(s) introduced into the reactor ri, i varying from 1 to n,
the amount by weight of all of the monomers entering the reactors r1 to rn representing from 5% to 25% by weight of the sum of the total inputs by weight of the reactors r1 to rn,
the overall conversion by weight Ci" in each reactor ri" being such that:

$$\frac{\boldsymbol{Cn}}{\boldsymbol{n}} - \mathbf{0.2} < \frac{\boldsymbol{Ci''}}{\boldsymbol{i''}} < \frac{\boldsymbol{Cn}}{\boldsymbol{n}} + \mathbf{0.2}$$

where

$$Ci'' = \frac{Pi''}{\sum_{1}^{n} Wi}$$

where Pi" is the weight of polymer formed at the outlet of the reactor ri", i" varying from 1 to n-1, and
Cn is the overall conversion by weight in the reactor rn, with

$$Cn = \frac{Pn}{\sum_{1}^{n} Wi}$$

where Pn is the weight of polymer formed at the outlet of the reactor rn,

b) a stage of modification of the living diene elastomer obtained in the preceding stage and exhibiting a polydispersity index varying from 1.1 to 2, preferably varying from 1.1 to less than 1.7, more preferably varying from 1.2 to 1.6, by means of at least one functionalization, coupling or star-branching agent, which makes it possible to introduce, into the elastomer, a functional group comprising at least one silicon atom directly connected to the elastomer chain.

2. Process according to Claim 1, **characterized in that** n = 2.

3. Process according to Claim 1 or 2, **characterized in that** the or each constituent of the reinjected solution(s) is, before reinjection, purified independently by adsorption, liquid/liquid extraction, gas/liquid extraction or distillation.

4. Process according to Claim 3, **characterized in that** the residues from the process(es) for the purification of the or each constituent are reinjected into the input solution feeding the first reactor.

5. Process according to any one of Claims 1 to 4, **characterized in that** the functionalization, coupling or star-branching agent which makes it possible to introduce, into the elastomer, a functional group comprising at least one silicon atom directly connected to the elastomer chain is at least one cyclic polysiloxane corresponding to the formula 1:

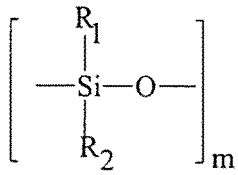
Formula 1

with m represents an integer with a value ranging from 3 to 8, preferably 3, and R1 and R2, which are identical or different, represent an alkyl radical of 1 to 10 carbon atoms, preferably an alkyl radical having from 1 to 4 carbon atoms, such as hexamethylcyclotrisiloxane.

6. Process according to any one of Claims 1 to 4, **characterized in that** the functionalization, coupling or star-branching agent which makes it possible to introduce, into the elastomer, a functional group comprising at least one silicon atom directly connected to the elastomer chain is at least one compound corresponding to the formula 2:

$$SiR1_p(OR')_{4-p-q}(R3\text{-}X)_q,$$

in which:

- R3 is a saturated or unsaturated, cyclic or non-cyclic, divalent $C_1$-$C_{18}$ aliphatic hydrocarbon radical or divalent $C_6$-$C_{18}$ aromatic hydrocarbon radical, preferably a linear or branched, divalent $C_1$-$C_{10}$ aliphatic hydrocarbon radical, more preferably a linear divalent $C_1$-$C_6$ aliphatic hydrocarbon radical and more preferably still the linear $C_2$ or $C_3$ hydrocarbon radical;
- X is a hydrogen atom or a functional group capable of interacting with a reinforcing filler;
- the R' radicals, which are substituted or unsubstituted and identical or different, represent a $C_1$-$C_{10}$, indeed even $C_1$-$C_8$, alkyl group, preferably a $C_1$-$C_4$ alkyl group, more preferably methyl and ethyl;
- the R1 radicals, which are substituted or unsubstituted and identical or different, represent a $C_1$-$C_{10}$ alkyl group, indeed even a $C_1$-$C_8$ alkyl group;
- p represents an integer with a value ranging from 0 to 2 and q represents an integer with the value 0 or 1, with the proviso that $p + q \leq 2$.

7. Process according to Claim 6, **characterized in that** the functionalization, coupling or star-branching agent does not comprise another functional group than that comprising the silicon atom of alkoxysilane type.

8. Process according to Claim 6, **characterized in that** the functionalization agent of formula 2 comprises a functional group supplementary to that comprising the silicon atom, comprising at least one heteroatom chosen from N, S, O or P.

9. Process according to Claim 8, **characterized in that** this supplementary functional group is a protected or unprotected primary amine, a protected or unprotected secondary amine or a tertiary amine which is cyclic or non-cyclic, an

isocyanate, an imine, a cyano, the protected or unprotected thiol functional group, a carboxylate, an epoxyde or a protected or unprotected primary phosphine, a protected or unprotected secondary phosphine or a tertiary phosphine.

**10.** Process according to Claim 9, **characterized in that** this supplementary functional group is an amine chosen from (3-N,N-dialkylaminopropyl)trialkoxysilanes, (3-N,N-dialkylaminopropyl)alkyldialkoxysilanes, (3-alkyltrimethylsilylaminopropyl)trialkoxysilanes, (3-alkyltrimethylsilylaminopropyl)alkyldialkoxysilanes, (3-bistrimethylsilylaminopropyl)trialkoxysilanes or (3-bistrimethylsilylaminopropyl)alkyldialkoxysilanes, the alkyl groups being methyl or ethyl and the alkoxy groups being methoxy or ethoxy.

**11.** Process according to Claim 9, **characterized in that** this supplementary functional group is a protected or unprotected thiol functional group chosen from (S-trialkylsilylmercaptopropyl)trialkoxysilanes, (S-trialkylsilylmercaptopropyl)alkyldialkoxysilanes, (S-trialkylsilylmercaptoethyl)trialkoxysilanes and (S-trialkylsilylmercaptoethyl)alkyldialkoxysilanes, the alkyl group on the silicon atom bearing the alkoxysilane groups being the methyl or ethyl group, the alkoxy group being the methoxy or ethoxy group and the alkyl group on the silicon bonded to the sulfur atom being the methyl or tert-butyl group.

**12.** Process according to any one of Claims 1 to 11, **characterized in that** it comprises a complementary stage of coupling or star-branching by means of a coupling or star-branching agent based on tin or silicon derivatives of formula $MR_xX_{4-x}$, in which M represents a Sn or Si atom, x represents an integer with a value from 0 to 2, preferably with a value from 0 to 1, R represents an alkyl radical of 1 to 10 carbon atoms, preferably an alkyl radical having from 1 to 4 carbon atoms, and X is a halogen atom, preferably chlorine, such as tin tetrachloride, methyltin trichloride, dimethyltin dichloride, tetrachlorosilane, methyltrichlorosilane and dimethyldichlorosilane.

**13.** Process according to any one of the preceding claims, **characterized in that** the monomers are butadiene and a vinylaromatic monomer, in particular styrene.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 6313232 B
- EP 1318172 A
- EP 1829906 A
- US 5587420 A
- JP 63235305 A
- US 6372863 B1
- FR 3009556 A1
- EP 2266819 A1


### Littérature non-brevet citée dans la description


- **VILMIN, F. ; DUSSAP, C. ; COSTE, N.** *Applied Spectroscopy,* 2006, vol. 60, 619-29